# EUROPEAN PATENT APPLICATION

(11) **EP 4 235 053 A1**
(43) Date of publication of application: **30.08.2023**
(21) Application number: 21883224.4
(22) Date of filing: 20.10.2021
(51) Int. Cl.: F24H 7/02, F24H 9/18

(54) **ELECTRODE BOILER DEVICE**

(30) Priority: 20.10.2020 KR 20200136111; 11.11.2020 KR 20200150558
(71) Applicant: Kim, No Eul, Yangsan-si, Gyeongsangnam-do 50607 (KR)
(72) Inventor: KIM, Young Tae, Busan 48472 (KR); KIM, No Eul, Yangsan-si Gyeongsangnam-do 50607 (KR)
(74) Representative: AWA Sweden AB
(86) International application number: PCT/KR2021/014672
(87) International publication number: WO 2022/086155

(57) **Abstract**

An embodiment of the present disclosure discloses an electrode boiler device configured to heat a fluid, the electrode boiler device includes a heating region formed such that electrolyzed water is disposed therein, and to have a length in one direction, a body part disposed in at least one region of an outer side of the heating region in a direction crossing a longitudinal direction of the heating region and formed to allow the fluid to be disposed therein to overlap the electrolyzed water, an electrode part having a plurality of electrodes formed to heat the electrolyzed water in the heating region, and a heat dissipation part disposed between the heating region and the body part.

## Description

### TECHNICAL FIELD

The present disclosure relates to an electrode boiler device.

### BACKGROUND ART

As technology advances, products to which various technologies are applied in the field of machinery and electronics are being developed and produced, and accordingly, various heating systems, for example, boiler systems, are being developed.

Boilers may be largely classified into industrial boilers, agricultural boilers, and household boilers. In addition, the types of boilers may be classified as a direct heating method or an indirect heating method in which a medium such as water is heated and circulated.

In addition, according to the types of energy sources of the boilers, as specific examples, boilers using petroleum, boilers using briquettes, boilers using wood, boilers using gas, boilers using electricity, and the like are being used or studied.

Among them, boilers using electricity to provide the heat source may have advantages in terms of soot and environmental problems compared to boilers using fossil fuels such as petroleum or coal.

However, there is a limitation in implementing a boiler system while easily securing thermal efficiency and electrical stability of a boiler using electricity.

### DESCRIPTION OF EMBODIMENTS

### TECHNICAL PROBLEM

The present disclosure may provide an electrode boiler device that may increase the use convenience of a user by improving electrical stability and thermal efficiency.

### TECHNICAL SOLUTION TO PROBLEM

An embodiment of the present disclosure discloses an electrode boiler device configured to heat a fluid, the electrode boiler device includes a heating region formed such that electrolyzed water is disposed therein, and to have a length in one direction, a body part disposed in at least one region of an outer side of the heating region in a direction crossing a longitudinal direction of the heating region and formed to allow the fluid to be disposed therein to overlap the electrolyzed water, an electrode part having a plurality of electrodes formed to heat the electrolyzed water in the heating region, and a heat dissipation part disposed between the heating region and the body part.

In the present embodiment, the heat dissipation part may further include an insulating layer formed on one side facing the electrolyzed water.

In the present embodiment, the fluid may be disposed to surround a side surface of the heating region.

In the present embodiment, the heat dissipation part may include a base and a plurality of heat dissipation protrusions formed to protrude from the base to face the fluid.

Another embodiment of the present disclosure discloses an electrode boiler device configured to heat a fluid, the electrode boiler device including a heating part formed such that electrolyzed water is disposed therein and a width or a length of a region in which the electrolyzed water is disposed is greater than a height of the region, a body part formed to allow the fluid to be disposed therein so as to overlap the electrolyzed water in at least one region, an electrode part disposed in the heating part and including one or more electrodes that are disposed to overlap the fluid in the body part and formed to heat the electrolyzed water, and a heat dissipation part disposed between the heating part and the body part.

Other aspects, features, and advantages other than those described above will become apparent from the following drawings, claims, and detailed description of the disclosure.

### ADVANTAGEOUS EFFECTS OF DISCLOSURE

An electrode boiler device according to the present disclosure can increase the use convenience of a user by improving electrical stability and thermal efficiency.

### BRIEF DESCRIPTION OF DRAWINGS

FIG. 1 is a schematic view illustrating an electrode boiler device according to an embodiment of the present disclosure.
FIG. 2 is an exemplary enlarged view of portion A of FIG. 1.
FIG. 3 is a schematic view illustrating an electrode boiler device according to another embodiment of the present disclosure.
FIG. 4 is a schematic view illustrating an electrode boiler device according to another embodiment of the present disclosure.
FIG. 5 is a schematic view illustrating an electrode boiler device according to another embodiment of the present disclosure.
FIG. 6 is a schematic view illustrating an electrode boiler device according to another embodiment of the present disclosure.
FIG. 7 is a schematic view illustrating an electrode boiler device according to another embodiment of the present disclosure.
FIG. 8 is a cross-sectional view taken along line VII-VII of FIG. 7.
FIG. 9 is a view illustrating a modified example of FIG. 8.
FIG. 10 is a schematic view illustrating an electrode boiler device according to another embodiment of the present disclosure.
FIG. 11 is a schematic view illustrating an electrode boiler device according to another embodiment of the present disclosure.
FIG. 12 is a cross-sectional view taken along line XII-XII of FIG. 11.
FIGS. 13 to 15 are views illustrating modified examples of FIG. 12.

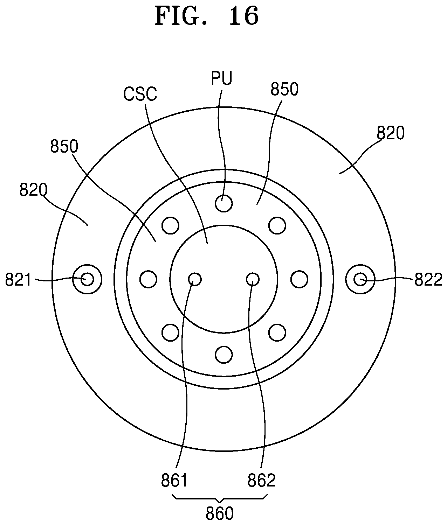

FIG. 16 is a view as viewed from direction K of FIG. 11.
FIG. 17 is a schematic view illustrating an electrode boiler device according to another embodiment of the present disclosure.
FIG. 18 is a cross-sectional view taken along line XVII-XVII of FIG. 17.
FIG. 19 is a perspective view illustrating an example of a heat dissipation part of FIG. 17.
FIG. 20 is a front view viewed from the front of FIG. 19.
FIGS. 21 to 24 are views illustrating modified examples of FIG. 20.
FIG. 25 is a schematic view illustrating an electrode boiler device according to an embodiment of the present disclosure.
FIG. 26 is a schematic plan view as viewed from direction T of FIG. 25.
FIG. 27 is an exemplary enlarged view of portion A of FIG. 25.
FIG. 28 is an exemplary enlarged view of portion B of FIG. 25.
FIG. 29 is a schematic view illustrating an electrode boiler device according to another embodiment of the present disclosure.
FIG. 30 is a schematic plan view as viewed from direction T of FIG. 29.
FIGS. 31 and 32 are views illustrating modified examples of FIG. 30.
FIG. 33 is a schematic view illustrating an electrode boiler device according to another embodiment of the present disclosure.
FIG. 34 is a schematic view illustrating an electrode boiler device according to another embodiment of the present disclosure.
FIG. 35 is a schematic view illustrating an electrode boiler device according to another embodiment of the present disclosure.
FIGS. 36 and 37 are exemplary views as viewed from direction M of FIG. 34.
FIG. 38 is a schematic view illustrating an electrode boiler device according to another embodiment of the present disclosure.
FIG. 39 is a schematic view illustrating an electrode boiler device according to another embodiment of the present disclosure.
FIG. 40 is a schematic view illustrating an electrode boiler device according to another embodiment of the present disclosure.
FIG. 41 is a schematic view illustrating an electrode boiler device according to another embodiment of the present disclosure.
FIG. 42 is a schematic perspective view illustrating an electrode boiler device according to another embodiment of the present disclosure.
FIG. 43 is a schematic view as viewed from direction A of FIG. 42.
FIG. 44 is a view illustrating an optional embodiment of the heat dissipation part of FIG. 42.

### MODE OF DISCLOSURE

Hereinafter, configurations and operations of the present disclosure will be described in detail with reference to embodiments of the present disclosure illustrated in the accompanying drawings.
While the present disclosure is susceptible to various modifications and alternative forms, specific embodiments thereof are shown by way of example in the drawings and will herein be described in detail. Advantages and features of the present disclosure and a method of achieving the same should become clear with embodiments described below in detail with reference to the drawings. However, the present disclosure is not limited to the embodiments disclosed below, but may be implemented in various forms.

Hereinafter, the embodiments of the present disclosure will be described below in detail with reference to the accompanying drawings, and when the embodiments of the present disclosure are described with reference to the drawings, the same or corresponding components are given the same reference numerals, and repetitive descriptions thereof will be omitted.

In the following embodiments, the terms "first," "second," and the like have been used to distinguish one component from another, rather than limitative in all aspects.

In the following embodiments, singular expressions are intended to include plural expressions as well, unless the context clearly indicates otherwise.

In the following embodiments, the terms such as "including," "having," and "comprising" are intended to indicate the existence of features or components disclosed in the specification, and are not intended to preclude the possibility that one or more other features or components may be added.

For convenience of description, sizes of components shown in the drawings may be exaggerated or reduced. For example, since the size and thickness of each component illustrated in the drawing are arbitrarily shown for convenience of description, the present disclosure is not necessarily limited to those illustrated in the drawing.

In the following embodiments, the x-axis, y-axis, and z-axis are not limited to three axes on a Cartesian coordinate system, and may be interpreted in a broad sense including them. For example, the x-axis, the y-axis, and the z-axis may be orthogonal to each other, but may refer to different directions that are not orthogonal to each other.

In a case in which a particular embodiment is realized otherwise, a particular process may be performed out of the order described. For example, two processes described in succession may be performed substantially simultaneously, or may be performed in an order opposite to the described order.

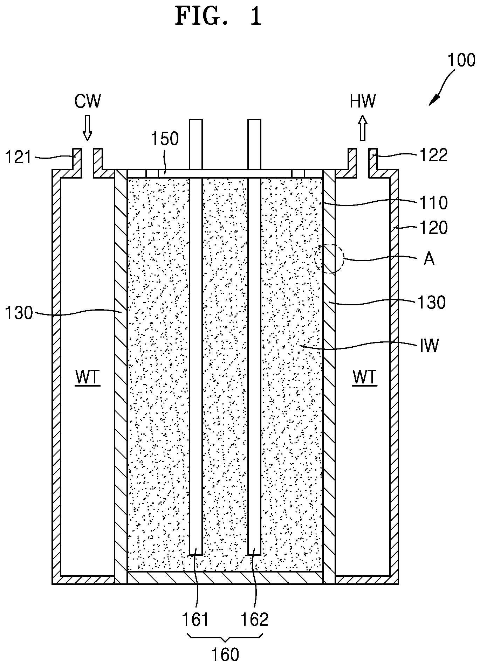

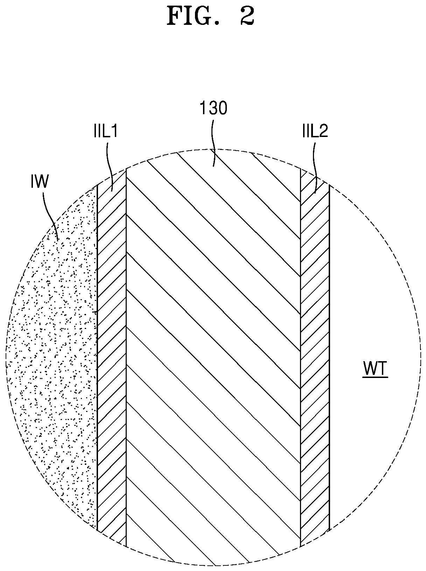

FIG. 1 is a schematic view illustrating an electrode boiler device according to an embodiment of the present disclosure, and FIG. 2 is an exemplary enlarged view of portion A of FIG. 1.

Referring to FIG. 1, an electrode boiler device 100 of the present embodiment may include a heating region 110, a body part 120, an electrode part 160, and a heat dissipation part 130.

An electrolyzed water IW may be disposed inside the heating region 110.

For example, the heating region 110 may include a space in a shape elongated in one direction, and may have a columnar shape as a specific example. In an optional embodiment, the heating region 110 may have a shape similar to a cylinder.

In an optional embodiment, at least one region of the heating region 110, for example, one region of a side surface surrounding the heating region 110 in a longitudinal direction may be defined by the heat dissipation part 130.

Accordingly, heat transfer from the electrolyzed water IW disposed in the heating region 110 to the heat dissipation part 130 may be easily performed.

The electrolyzed water IW may be of various types. For example, the electrolyzed water IW may include an electrolyte solution, specifically distilled water, filtered water, bottled water, tap water, or the like in which at least one of various types of electrolyte solutions is appropriately diluted.

As an electrolyte material included in the electrolyzed water IW, there are various types including rust inhibitors or the like that contain edible soda, chlorite, silicate, an inorganic material of polyphosphate, amines, oxyacids, or the like as main components.

The heating region 110 may have various shapes and may be formed to control at least the entry and exit of the electrolyzed water IW. For example, the heating region 110 may be formed such that the electrolyzed water IW does not flow out of the heating region 110 after filling the heating region 110 with the electrolyzed water IW, and as another example, the heating region 110 may include a replenishing inlet (not shown) for replenishing or discharging the electrolyzed water IW.

In an optional embodiment, one region of the heating region 110, for example, one region of a bottom or a side surface, which is a region in contact with the electrolyzed water IW, may be formed of various materials, and may be formed of a durable and lightweight insulating material. In addition, in another optional embodiment, the one region of the heating region 110 may be formed of a metal material.

In another example, from among regions of the heating region 110, the region in contact with the electrolyzed water IW may include a Teflon resin which is a fluorine resin.

In an optional embodiment, from among the regions of the heating region 110, at least an inner surface of the heating region 110 adjacent to the electrolyzed water IW may include an insulating layer, may include, for example, an inorganic layer, and may contain an inorganic material including ceramic.

In an optional embodiment, a cover part 150 may be disposed on one side of the heating region 110, and for example, the electrode part 160 may be formed to be connected to the heating region 110 from an outer side of the cover part 150.

Through the cover part 150, it is possible to reduce or prevent unwanted exposure of the electrolyzed water IW to the outside, and thereby prevent safety accidents such as electric shock caused by the electrolyzed water IW.

The body part 120 may be formed such that a fluid WT may be disposed therein to overlap the electrolyzed water IW in at least one region. The fluid WT may include various types, for example, a liquid or a gas.

In an optional embodiment, the fluid WT may include water, and for example, the electrode boiler device 100 may include a method of using hot water.

The body part 120 may be disposed in at least one region of an outer side of the heating region 110 in a direction crossing a longitudinal direction of the heating region 110.

In an optional embodiment, the body part 120 may be disposed to surround the outer side of the heating region 110, and the fluid WT may be disposed in an inner space of the body part 120 so as to surround the outer side of the heating region 110.

With such a configuration of the body part 120, heat transfer between the fluid WT and the electrolyzed water IW in the body part 120 may be efficiently performed.

The body part 120 may have various shapes, and may include at least an inlet 121 for inflowing the fluid WT and an outlet 122 for discharging the fluid WT.

Specifically, an unheated fluid CW before heating, which is introduced via the inlet 121, may be introduced, and for example, the unheated fluid CW may include room temperature or low temperature water.

A heated fluid HW, for example, heated water may be discharged via the outlet 122.

In a specific example, the unheated fluid CW including room temperature water, which is introduced via the inlet 121, is introduced into the body part 120 and then heated through the heating region 110, and the heated fluid HW including heated water may be discharged via the outlet 122.

The body part 120 may be formed of various materials. For example, the body part 120 may be formed of a durable and lightweight insulating material. In an optional embodiment, the body part 120 may be formed of a plastic material including various types of resins. In another optional embodiment, the body part 120 may also include an inorganic material such as ceramic.

In addition, in another optional embodiment, the body part 120 may be formed of a metal material.

In another example, the body part 120 may include a Teflon resin that is a fluorine resin.

In an optional embodiment, from among surfaces of the body part 120, at least an inner surface of the body part 120 adjacent to the fluid WT may include an insulating layer, may include, for example, an inorganic layer, and may contain an inorganic material including ceramic.

The electrode part 160 may be disposed in the heating region 110. In addition, the electrode part 160 may be disposed to overlap the electrolyzed water IW to heat the electrolyzed water IW in the heating region 110.

In addition, the electrode part 160 may overlap the fluid WT disposed inside the body part 120 in one direction.

The electrode part 160 may include a plurality of electrodes.

For example, the electrode part 160 may include a first electrode 161 and a second electrode 162.

In a specific example, the first electrode 161 and the second electrode 162 may each be formed to be in contact with the electrolyzed water IW. Although not shown in the drawing, current may be applied to the first electrode 161 and the second electrode 162 under control of an electrode control part (not shown), and the applied current may be controlled through a control part (not shown).

The electrolyzed water IW may be heated by the current applied to the first and second electrodes 161 and 162 of the electrode part 160. The heat of the electrolyzed water IW may be transferred to the fluid WT of the body part 120, and the fluid WT may be heated.

The first electrode 161 and the second electrode 162 may have a shape in which the first electrode 161 and the second electrode 162 are spaced apart from each other at an interval in an inner space of the heating region 110.

For example, the first electrode 161 and the second electrode 162 may have shapes elongated while being spaced apart from each other at an interval in the inner space of the heating region 110, and may each have a linear shape. One end portion formed to extend from each of the first electrode 161 and the second electrode 162 may be formed to be spaced apart from a region of the heating region 110, specifically, the inner surface and a bottom surface of the heating region 110.

Further, a conductive part (not shown) connected to one region of each of the first electrode 161 and the second electrode 162 may be included so that current is applied to the first electrode 161 and the second electrode 162 therethrough. The conductive part (not shown) may be a wire-shaped conductive line and may be connected to the electrode control part (not shown). In an optional embodiment, the conductive part (not shown) may be separately provided on the outer side of the heating region 110, and may have a shape extending to the outer side of the cover part 150 as a specific example.

Although not shown in the drawing, in an optional embodiment, the electrode part 160 may also include three electrodes in the form of three phases.

In an optional embodiment, a temperature sensing member (not shown) may be connected to the heating region 110 to measure the temperature of the electrolyzed water IW inside the heating region 110. In addition, a cooling part (not shown) may be additionally disposed to control overheating of the temperature sensing part (not shown).

The control part (not shown) may be formed to control current applied to the electrode part 160. The current applied to each of the first and second electrodes 161 and 162 of the electrode part 160 may be controlled through the control part (not shown), and in an optional embodiment, the current may be controlled in real time.

At this time, the control part (not shown) may check the amount of current applied to the electrode part 160 and perform current control by increasing or decreasing the amount of current according to a set value, thereby reducing a rapid temperature change of the electrolyzed water IW.

The control part (not shown) may have various forms to facilitate a change in current. For example, the control part (not shown) may also include various types of switches, and may include a non-contact relay such as a solid state relay (SSR) for sensitive and rapid control.

The heat dissipation part 130 may be disposed between the heating region 110 and the body part 120.

The heat dissipation part 130 may be located between the electrolyzed water IW disposed in the heating region 110 and the fluid WT disposed in the body part 120. In addition, the heat dissipation part 130 may be formed to be spaced apart from the electrode part 160.

For example, the heat dissipation part 130 may have a shape elongated to have a length in a direction same as the longitudinal direction of the heating region 110. In an optional embodiment, the heat dissipation part 130 may have a hollow cylindrical shape.

In an optional embodiment, the heat dissipation part 130 may be in contact with the electrolyzed water IW.

In an optional embodiment, the heat dissipation part 130 may be in contact with the fluid WT.

The heat dissipation part 130 may be formed of a material having high thermal conductivity, and may be formed to include, for example, a metal material. Heat of the electrolyzed water IW may be easily transferred to the fluid WT through the heat dissipation part 130.

In a specific example, the heat dissipation part 130 may include iron, aluminum, stainless steel, or other alloys.

In addition, in an optional embodiment, the heat dissipation part 130 may include an insulating coating layer (not shown) on one side facing the electrolyzed water IW, and, in another example, the heat dissipation part 130 may also include an insulating coating layer (not shown) on one side facing the fluid WT. This may reduce or prevent current from flowing through the heat dissipation part 130 from the electrolyzed water IW.

In a specific example, the heat dissipation part 130 may surround at least one outer region of the heating region 110 in which the electrolyzed water IW is disposed, and thus may be formed to surround an outer side of the region of the electrolyzed water IW.

In addition, the fluid WT may be disposed to surround the heat dissipation part 130 from an outer side of the heat dissipation part 130.

In an optional embodiment, the heat dissipation part 130 may be formed to correspond to a bottom of the heating region 110 in which the electrolyzed water IW is disposed, thereby effectively receiving heat from the electrolyzed water IW.

In addition, in another example, the heat dissipation part 130 may also be formed to be connected to a bottom portion defining the bottom of the heating region 110.

FIG. 2 is an exemplary enlarged view of portion A of FIG. 1.

In an optional embodiment, referring to FIG. 2, the heat dissipation part 130 may include a first insulating layer IIL1 on a side surface facing the electrolyzed water IW and a second insulating layer IIL2 on a side surface facing the fluid WT.

In addition, in an optional embodiment, the heat dissipation part 130 may include only the first insulating layer IIL1 on at least the side surface facing the electrolyzed water IW.

The first insulating layer IIL1 or the second insulating layer IIL2 may include an inorganic layer, such as a ceramic material or the like.

In another example, the first insulating layer IlL 1 or the second insulating layer IIL2 may include an organic layer such as a resin layer, and may also include an insulating Teflon layer as a specific example.

The first insulating layer IIL1 may reduce current flowing to the heat dissipation part 130 through the electrolyzed water IW, and may reduce or prevent the flow of the leaked current from remaining in the body part 120 or the fluid WT. Furthermore, when leakage current components remain in the heat dissipation part 130, the first insulating layer IIL1 may reduce or prevent the leakage current components from flowing to the fluid WT, thereby reducing the occurrence of an electrical accident that may occur during the flow of the fluid WT.

The electrode boiler device of the present embodiment may heat electrolyzed water inside the heating region through control of current applied to the electrodes of the electrode part disposed in the heating region. The heat of the electrolyzed water may be transferred to a fluid of the body part to heat the fluid. Here, the heat dissipation part is disposed between the heating region and the body part so that the heat of the electrolyzed water is transferred to the fluid through the heat dissipation part.

With such a configuration, the heat of the electrolyzed water may be effectively transferred to the fluid, which may improve fluid heating efficiency through the electrolyzed water.

In addition, the body part may be disposed on the outer side of the heating region to face the side surface of the heating region so as to overlap the electrolyzed water, for example, in a direction crossing the longitudinal direction of the heating region, and in an optional embodiment, the body part may be disposed to surround the outer side of the heating region.

Accordingly, a speed at which the heat of the electrolyzed water is transferred to the fluid of the body part may be improved, and uniformity of heating of the fluid disposed inside the body part may be improved.

In addition, in an optional embodiment, the body part is disposed to surround the heating region so that the fluid inside the body part may be circulated so as to surround the heating region, so that the heating of the fluid may be performed rapidly, and since the flow of circulation proceeds smoothly from an unheated fluid flowing into the body part to a heated fluid, the overall efficiency of the electrode boiler device may be improved, thereby improving user convenience. For example, hot water may be easily supplied to a user.

In addition, from among side surfaces of the heat dissipation part, the side surface facing the electrolyzed water includes an insulating layer, for example, an inorganic insulating layer such as ceramic, so that the flow of current or the flow of leakage current from the electrolyzed water to the heat dissipation part may be reduced or prevented. In addition, the use stability of the user may be increased.

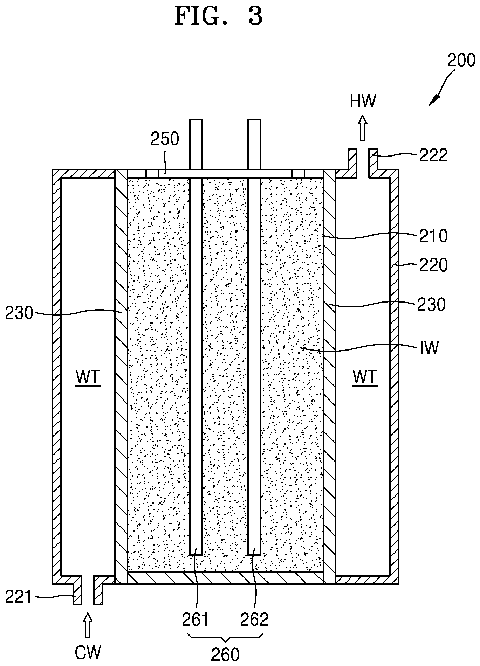

FIG. 3 is a schematic view illustrating an electrode boiler device according to another embodiment of the present disclosure.

Referring to FIG. 3, an electrode boiler device 200 of the present embodiment may include a heating region 210, a body part 220, an electrode part 260, and a heat dissipation part 230.

For convenience of description, differences from the above-described embodiments will be mainly described.

An electrolyzed water IW may be disposed inside the heating region 210.

In an optional embodiment, a cover part 250 may be disposed on one side of the heating region 210.

The body part 220 may be formed such that a fluid WT may be disposed therein to overlap the electrolyzed water IW in at least one region. The fluid WT may include various types, for example, a liquid or a gas.

The body part 220 may have various shapes, and may include at least an inlet 221 for inflowing the fluid WT and an outlet 222 for discharging the fluid WT.

In a specific example, the inlet 221 is formed to face one side of the body part 220, and the outlet 222 may be formed in a region different from a region, in which the inlet 221 is formed, to face the other side of the body part 220.

In an optional embodiment, the region in which the inlet 221 is formed and the region in which the outlet 222 is formed may be in opposite directions. For example, the inlet 221 may be formed on one side of the region of the body part 220 in a longitudinal direction of the heating region 210, and the outlet 222 may be formed on the other side thereof opposite to the inlet 221.

Specifically, an unheated fluid CW before heating, which is introduced via the inlet 221, may be introduced, and for example, the unheated fluid CW may include room temperature or low temperature water.

A heated fluid HW, for example, heated water may be discharged via the outlet 222.

In a specific example, the unheated fluid CW including room temperature water, which is introduced via the inlet 221, is introduced into the body part 220 and then heated through the heating region 210, and the heated fluid HW including heated water may be discharged via the outlet 222.

The electrode part 260 and the heat dissipation part 230 are the same or similar to those described in the embodiment described above, and thus detailed descriptions thereof will be omitted.

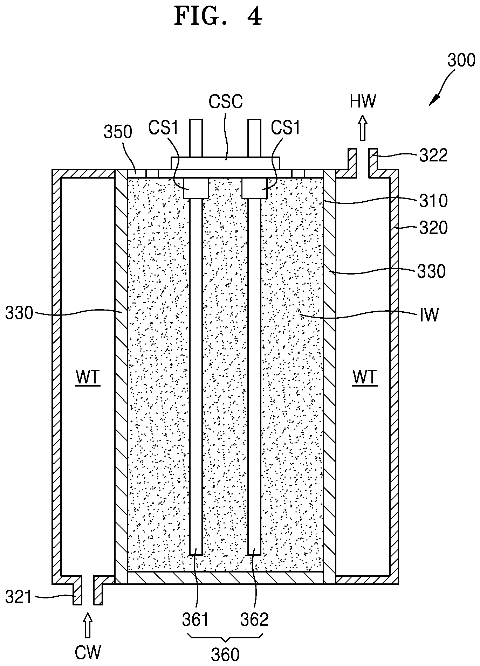

FIG. 4 is a schematic view illustrating an electrode boiler device according to another embodiment of the present disclosure.

Referring to FIG. 4, an electrode boiler device 300 of the present embodiment may include a heating region 310, a body part 320, an electrode part 360, and a heat dissipation part 330.

An electrolyzed water IW may be disposed inside the heating region 310, and the contents thereof may be the same as those described in the above-described embodiments or may be modified and applied within a similar range as necessary, and thus detailed descriptions thereof will be omitted.

In an optional embodiment, a cover part 350 may be disposed on one side of the heating region 310, and the electrode part 360 may be formed, for example, to be connected to the heating region 310 from an outer side of the cover part 350.

Through the cover part 350, it is possible to reduce or prevent unwanted exposure of the electrolyzed water IW to the outside, and thereby prevent safety accidents such as electric shock caused by the electrolyzed water IW.

The body part 320 may be formed such that a fluid WT may be disposed therein to overlap the electrolyzed water IW in at least one region. The fluid WT may include various types, for example, a liquid or a gas.

The contents of the body part 320 and the fluid WT may be the same as those described in the above-described embodiments or may be modified and applied within a similar range as necessary, and thus detailed descriptions thereof will be omitted.

The electrode part 360 may be disposed in the heating region 310. In addition, the electrode part 360 may be disposed to overlap the electrolyzed water IW to heat the electrolyzed water IW in the heating region 310.

In addition, the electrode part 360 may overlap the fluid WT disposed inside the body part 320 in one direction.

The electrode part 360 may include a plurality of electrodes.

For example, the electrode part 360 may include a first electrode 361 and a second electrode 362.

In a specific example, the first electrode 361 and the second electrode 362 may each be formed to be in contact with the electrolyzed water IW. Although not shown in the drawing, current may be applied to the first electrode 361 and the second electrode 362 under control of an electrode control part (not shown), and the applied current may be controlled through a control part (not shown).

The electrolyzed water IW may be heated by the current applied to the first and second electrodes 361 and 362 of the electrode part 360. The heat of the electrolyzed water IW may be transferred to the fluid WT of the body part 320, and the fluid WT may be heated.

The first electrode 361 and the second electrode 362 may have a shape in which the first electrode 361 and the second electrode 362 are spaced apart from each other at an interval in an inner space of the heating region 310.

For example, the first electrode 361 and the second electrode 362 may have shapes elongated while being spaced apart from each other at an interval in the inner space of the heating region 310, and may each have a linear shape. One end portion formed to extend from each of the first electrode 361 and the second electrode 362 may be formed to be spaced apart from a region of the heating region 310, specifically, an inner surface and a bottom surface of the heating region 310.

The first electrode 361 and the second electrode 362 may be connected to insulating members CS1 and CS2 when the first electrode 361 and the second electrode 362 are connected to the cover part 350.

In a specific example, a first insulating member CS1 may be disposed between the first electrode 361 and the cover part 350. By improving an insulating property between the first electrode 361 and the cover part 350 through the first insulating member CS1, current leakage from the first electrode 361 to the outside may be reduced or prevented, and safety of use and handling may be improved.

A second insulating member CS2 may be disposed between the second electrode 362 and the cover part 350. By improving an insulating property between the second electrode 362 and the cover part 350 through the second insulating member CS2, current leakage from the second electrode 362 to the outside may be reduced or prevented, and safety of use and handling may be improved.

In addition, through the first insulating member CS1 and the second insulating member CS2, the first electrode 361 and the second electrode 362 are firmly disposed, so that the first electrode 361 and the second electrode 362 may be insulated from each other and prevented from being short-circuited to each other.

In an optional embodiment, an insulating cap CSC may be disposed on an upper side of the cover part 350, for example, on a surface of the cover part 350, which is opposite to a region facing the heating region 310 among regions of the cover part 350.

In an optional embodiment, the insulating cap CSC may be connected to extending regions of the first electrode 361 and the second electrode 362 extending outward from the cover part 350, and may insulate the extending regions from the cover part 350.

The heat dissipation part 330 may be disposed between the heating region 310 and the body part 320.

The heat dissipation part 330 may be located between the electrolyzed water IW disposed in the heating region 310 and the fluid WT disposed in the body part 320. In addition, the heat dissipation part 330 may be formed to be spaced apart from the electrode part 360.

The contents of the heat dissipation part 330 may be the same as those described in the above-described embodiments or may be modified and applied within a similar range as necessary, and thus detailed descriptions thereof will be omitted.

In an optional embodiment, the heat dissipation part 330 may include a first insulating layer (not shown) on a side surface facing the electrolyzed water IW and a second insulating layer (not shown) on a side surface facing the fluid WT. Detailed contents are the same as those described in the above-described embodiments, and thus will be omitted.

The electrode boiler device of the present embodiment may heat electrolyzed water inside the heating region through control of current applied to the electrodes of the electrode part disposed in the heating region. The heat of the electrolyzed water may be transferred to a fluid of the body part to heat the fluid. Here, the heat dissipation part is disposed between the heating region and the body part so that the heat of the electrolyzed water is transferred to the fluid through the heat dissipation part.

With such a configuration, the heat of the electrolyzed water may be effectively transferred to the fluid, which may improve fluid heating efficiency through the electrolyzed water.

In addition, the body part may be disposed on the outer side of the heating region to face the side surface of the heating region so as to overlap the electrolyzed water, for example, in a direction crossing the longitudinal direction of the heating region, and in an optional embodiment, the body part may be disposed to surround the outer side of the heating region.

Accordingly, a speed at which the heat of the electrolyzed water is transferred to the fluid of the body part may be improved, and uniformity of heating of the fluid disposed inside the body part may be improved.

In addition, in an optional embodiment, the body part is disposed to surround the heating region so that the fluid inside the body part may be circulated so as to surround the heating region, so that the heating of the fluid may be performed rapidly, and since the flow of circulation proceeds smoothly from an unheated fluid flowing into the body part to a heated fluid, the overall efficiency of the electrode boiler device may be improved, thereby improving user convenience. For example, hot water may be easily supplied to a user.

In addition, from among side surfaces of the heat dissipation part, the side surface facing the electrolyzed water includes an insulating layer, for example, an inorganic insulating layer such as ceramic, so that the flow of current or the flow of leakage current from the electrolyzed water to the heat dissipation part may be reduced or prevented. In addition, the use stability of the user may be increased.

In addition, the first insulating member and the second insulating member may be disposed between the first and second electrodes and the cover part, and in an optional embodiment, the first insulating member and the second insulating member may cause the first electrode and the second electrode to be fixed to the cover part.

In addition, the insulating cap may be disposed on an upper side of the cover part, and extending regions of the first electrode and the second electrode may be formed to pass through the insulating cap. This may improve safety by reducing or preventing unnecessary leakage of current.

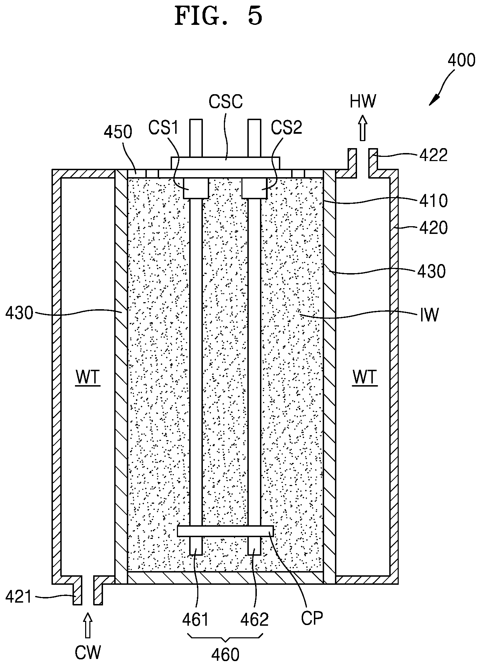

FIG. 5 is a schematic view illustrating an electrode boiler device according to another embodiment of the present disclosure.

Referring to FIG. 5, an electrode boiler device 400 of the present embodiment may include a heating region 410, a body part 420, an electrode part 460, and a heat dissipation part 430.

An electrolyzed water IW may be disposed inside the heating region 410, and the contents thereof may be the same as those described in the above-described embodiments or may be modified and applied within a similar range as necessary, and thus detailed descriptions thereof will be omitted.

In an optional embodiment, a cover part 450 may be disposed on one side of the heating region 410, and the electrode part 460 may be formed, for example, to be connected to the heating region 410 from an outer side of the cover part 450.

Through the cover part 450, it is possible to reduce or prevent unwanted exposure of the electrolyzed water IW to the outside, and thereby prevent safety accidents such as electric shock caused by the electrolyzed water IW.

The body part 420 may be formed such that a fluid WT may be disposed therein to overlap the electrolyzed water IW in at least one region. The fluid WT may include various types, for example, a liquid or a gas.

The contents of the body part 420 and the fluid WT may be the same as those described in the above-described embodiments or may be modified and applied within a similar range as necessary, and thus detailed descriptions thereof will be omitted.

The electrode part 460 may be disposed in the heating region 410. In addition, the electrode part 460 may be disposed to overlap the electrolyzed water IW to heat the electrolyzed water IW in the heating region 410.

In addition, the electrode part 460 may overlap the fluid WT disposed inside the body part 420 in one direction.

The electrode part 460 may include a plurality of electrodes.

For example, the electrode part 460 may include a first electrode 461 and a second electrode 462.

In a specific example, the first electrode 461 and the second electrode 462 may each be formed to be in contact with the electrolyzed water IW. Although not shown in the drawing, current may be applied to the first electrode 461 and the second electrode 462 under control of an electrode control part (not shown), and the applied current may be controlled through a control part (not shown).

The electrolyzed water IW may be heated by the current applied to the first and second electrodes 461 and 462 of the electrode part 460. The heat of the electrolyzed water IW may be transferred to the fluid WT of the body part 420, and the fluid WT may be heated.

The first electrode 461 and the second electrode 462 may have a shape in which the first electrode 461 and the second electrode 462 are spaced apart from each other at an interval in an inner space of the heating region 410.

For example, the first electrode 461 and the second electrode 462 may have shapes elongated while being spaced apart from each other at an interval in the inner space of the heating region 410, and may each have a linear shape. One end portion formed to extend from each of the first electrode 461 and the second electrode 462 may be formed to be spaced apart from a region of the heating region 410, specifically, an inner surface and a bottom surface of the heating region 410.

The first electrode 461 and the second electrode 462 may be connected to insulating members CS1 and CS2 when the first electrode 461 and the second electrode 462 are connected to the cover part 450.

In a specific example, a first insulating member CS1 may be disposed between the first electrode 461 and the cover part 450. By improving an insulating property between the first electrode 461 and the cover part 450 through the first insulating member CS1, current leakage from the first electrode 461 to the outside may be reduced or prevented, and safety of use and handling may be improved.

A second insulating member CS2 may be disposed between the second electrode 462 and the cover part 450. By improving an insulating property between the second electrode 462 and the cover part 450 through the second insulating member CS2, current leakage from the second electrode 462 to the outside may be reduced or prevented, and safety of use and handling may be improved.

In addition, through the first insulating member CS1 and the second insulating member CS2, the first electrode 461 and the second electrode 462 are firmly disposed, so that the first electrode 461 and the second electrode 462 may be insulated from each other and prevented from being short-circuited to each other.

A support member CP may be disposed to support the electrode part 460.

For example, the support member CP may be formed to support the first and second electrodes 461 and 462 of the electrode part 460.

Accordingly, the first electrode 461 and the second electrode 462 may be firmly disposed with respect to each other in the heating region 410, and for example, edge regions thereof may be prevented from warping or deforming, and prevented from being connected or short-circuited to each other.

The support member CP may be formed of a material having excellent durability, for example, a resin-based material, and may be formed of an inorganic insulating material or other various insulating materials.

In an optional embodiment, an insulating cap CSC may be disposed on an upper side of the cover part 450, for example, on a surface of the cover part 450, which is opposite to a region facing the heating region 410 among regions of the cover part 450.

In an optional embodiment, the insulating cap CSC may be connected to extending regions of the first electrode 461 and the second electrode 462 extending outward from the cover part 450, and may insulate the extending regions from the cover part 450.

The heat dissipation part 430 may be disposed between the heating region 410 and the body part 420.

The heat dissipation part 430 may be located between the electrolyzed water IW disposed in the heating region 410 and the fluid WT disposed in the body part 420. In addition, the heat dissipation part 430 may be formed to be spaced apart from the electrode part 460.

The contents of the heat dissipation part 430 may be the same as those described in the above-described embodiments or may be modified and applied within a similar range as necessary, and thus detailed descriptions thereof will be omitted.

In an optional embodiment, the heat dissipation part 430 may include a first insulating layer (not shown) on a side surface facing the electrolyzed water IW and a second insulating layer (not shown) on a side surface facing the fluid WT. Detailed contents are the same as those described in the above-described embodiments, and thus will be omitted.

The electrode boiler device of the present embodiment may heat electrolyzed water inside the heating region through control of current applied to the electrodes of the electrode part disposed in the heating region. The heat of the electrolyzed water may be transferred to a fluid of the body part to heat the fluid. Here, the heat dissipation part is disposed between the heating region and the body part so that the heat of the electrolyzed water is transferred to the fluid through the heat dissipation part.

With such a configuration, the heat of the electrolyzed water may be effectively transferred to the fluid, which may improve fluid heating efficiency through the electrolyzed water.

In addition, the body part may be disposed on the outer side of the heating region to face the side surface of the heating region so as to overlap the electrolyzed water, for example, in a direction crossing the longitudinal direction of the heating region, and in an optional embodiment, the body part may be disposed to surround the outer side of the heating region.

Accordingly, a speed at which the heat of the electrolyzed water is transferred to the fluid of the body part may be improved, and uniformity of heating of the fluid disposed inside the body part may be improved.

In addition, in an optional embodiment, the body part is disposed to surround the heating region so that the fluid inside the body part may be circulated so as to surround the heating region, so that the heating of the fluid may be performed rapidly, and since the flow of circulation proceeds smoothly from an unheated fluid flowing into the body part to a heated fluid, the overall efficiency of the electrode boiler device may be improved, thereby improving user convenience. For example, hot water may be easily supplied to a user.

In addition, from among side surfaces of the heat dissipation part, the side surface facing the electrolyzed water includes an insulating layer, for example, an inorganic insulating layer such as ceramic, so that the flow of current or the flow of leakage current from the electrolyzed water to the heat dissipation part may be reduced or prevented. In addition, the use stability of the user may be increased.

In addition, the support member may be formed inside the heating region to support the first electrode and the second electrode. For example, the support member may be elongated from a region between the first electrode and the second electrode in directions to the first electrode and the second electrode.

Accordingly, the first electrode and the second electrode may be stably and firmly disposed in the heating region, and damage, deformation, or the like in a region adjacent to edges of the first electrode and the second electrode may be easily reduced or prevented.

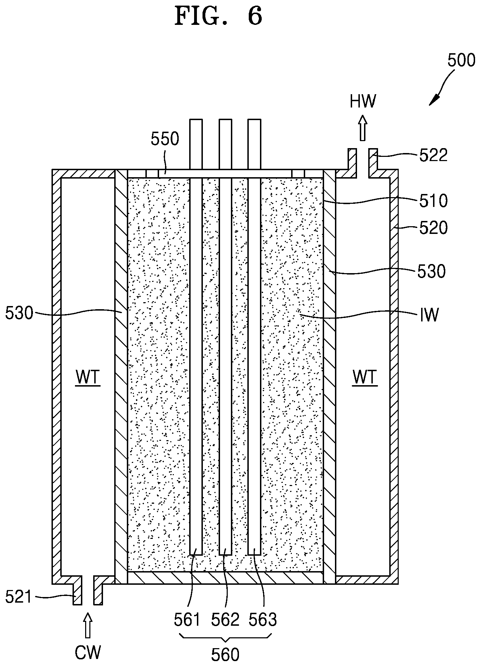

FIG. 6 is a schematic view illustrating an electrode boiler device according to another embodiment of the present disclosure.

Referring to FIG. 6, an electrode boiler device 500 of the present embodiment may include a heating region 510, a body part 520, an electrode part 560, and a heat dissipation part 530.

For convenience of description, differences from the above-described embodiments will be mainly described.

The electrode part 560 of the present embodiment may be provided in a three-phase form, and may include three electrode members. Specifically, the electrode part 560 may include a first electrode 561, a second electrode 562, and a third electrode 563.

The first, second, and third electrodes 561, 562, and 563 may be electrically connected to an electrode control part so that current is applied thereto.

Although not shown in the drawing, the structure of the three electrode members of the electrode part 560 of the present embodiment may be selectively applied to the above-described or below-described embodiments.

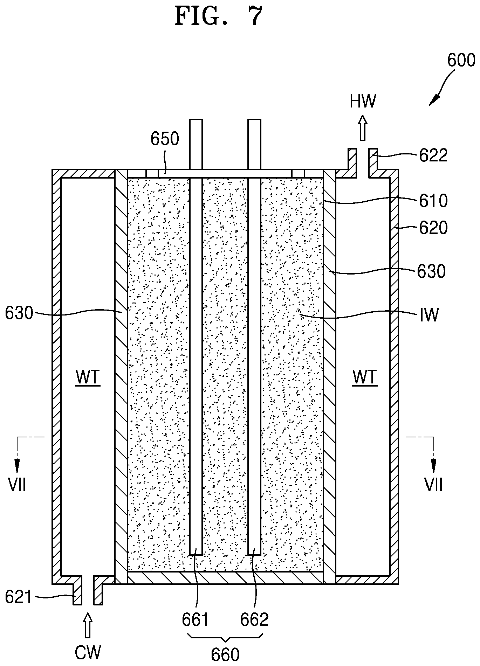

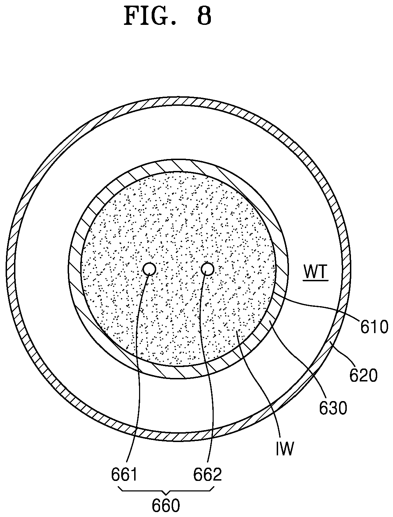

FIG. 7 is a schematic view illustrating an electrode boiler device according to another embodiment of the present disclosure, and FIG. 8 is a cross-sectional view taken along line VII-VII of FIG. 7.

Referring to FIGS. 7 and 8, an electrode boiler device 600 of the present embodiment may include a heating region 610, a body part 620, an electrode part 660, and a heat dissipation part 630.

An electrolyzed water IW may be disposed inside the heating region 610.

As shown in FIGS. 7 and 8, the heating region 610 may have a length and may have a shape similar to, for example, a column. In a specific example, the heating region 610 may include a curved outer surface, and in an optional embodiment, the heating region 610 may have a shape similar to a cylinder.

The heating region 610 may include an upper surface, a lower surface, and a side surface, of which the side surface may be defined by the heat dissipation part 630 as an optional embodiment.

In another example, a separate housing defining the heating region 610 may be provided.

Further details of the heating region 610 are the same as those described in the above-described embodiments or may be modified and applied within a similar range as necessary, and thus detailed descriptions thereof will be omitted.

In an optional embodiment, a cover part 650 may be disposed on one side of the heating region 610, and the electrode part 660 may be formed, for example, to be connected to the heating region 610 from an outer side of the cover part 650.

Through the cover part 650, it is possible to reduce or prevent unwanted exposure of the electrolyzed water IW to the outside, and thereby prevent safety accidents such as electric shock caused by the electrolyzed water IW.

The body part 620 may be formed such that a fluid WT may be disposed therein to overlap the electrolyzed water IW in at least one region. The fluid WT may include various types, for example, a liquid or a gas.

The body part 620 may be formed to surround the heating region 610. For example, the body part 620 may have a length in the same direction as a longitudinal direction of the heating region 610, may have a hollow columnar shape, and the fluid WT may be disposed inside the body part 620.

The fluid WT may be disposed to surround the heating region 610 and may be disposed in a shape surrounding the electrolyzed water IW.

In an optional embodiment, when the heating region 610 has a curved outer surface, for example, a shape similar to a cylinder, the fluid WT may generate a curved flow corresponding to the curved side surface of the heating region 610, which may improve the uniformity of heat transfer and heating of the fluid WT.

Further details of the body part 620 and the fluid WT may be the same as those described in the above-described embodiments or may be modified and applied within a similar range as necessary, and thus detailed descriptions thereof will be omitted.

The electrode part 660 may be disposed in the heating region 610. In addition, the electrode part 660 may be disposed to overlap the electrolyzed water IW to heat the electrolyzed water IW in the heating region 610.

In addition, the electrode part 660 may overlap the fluid WT disposed inside the body part 620 in one direction.

The electrode part 660 may include a plurality of electrodes.

For example, the electrode part 660 may include a first electrode 661 and a second electrode 662.

In a specific example, the first electrode 661 and the second electrode 662 may each be formed to be in contact with the electrolyzed water IW. Although not shown in the drawing, current may be applied to the first electrode 661 and the second electrode 662 under control of an electrode control part (not shown), and the applied current may be controlled through a control part (not shown).

The electrolyzed water IW may be heated by the current applied to the first and second electrodes 661 and 662 of the electrode part 660. The heat of the electrolyzed water IW may be transferred to the fluid WT of the body part 620, and the fluid WT may be heated.

The first electrode 661 and the second electrode 662 may have a shape in which the first electrode 661 and the second electrode 662 are spaced apart from each other at an interval in an inner space of the heating region 610.

For example, the first electrode 661 and the second electrode 662 may have shapes elongated while being spaced apart from each other at an interval in the inner space of the heating region 610, and may each have a linear shape. One end portion formed to extend from each of the first electrode 661 and the second electrode 662 may be formed to be spaced apart from a region of the heating region 610, specifically, an inner surface and a bottom surface of the heating region 610.

Although not shown in the drawing, the first electrode 661 and the second electrode 662 may be connected to an insulating member (not shown) when the first electrode 661 and the second electrode 662 are connected to the cover part 650. A detailed description thereof is the same as that provided in the above-described embodiments, and thus will be omitted.

A support member (not shown) may be disposed to support the electrode part 660, and for example, the support member (not shown) may be formed to support the first and second electrodes 661 and 662 of the electrode part 660. A detailed description thereof is the same as that provided in the above-described embodiments, and thus will be omitted.

In an optional embodiment, an insulating cap (not shown) may be disposed on an upper side of the cover part 650, for example, on a surface of the cover part 650, which is opposite to a region facing the heating region 610 among regions of the cover part 650.

The heat dissipation part 630 may be disposed between the heating region 610 and the body part 620.

The heat dissipation part 630 may be located between the electrolyzed water IW disposed in the heating region 610 and the fluid WT disposed in the body part 620. In addition, the heat dissipation part 630 may be formed to be spaced apart from the electrode part 660.

The heat dissipation part 630 may be formed to surround an outer side of the heating region 610. For example, the heat dissipation part 630 may be disposed on an outer side of the electrolyzed water IW to surround at least one region of the electrolyzed water IW in a longitudinal direction.

The heat dissipation part 630 may have various shapes, and may have a columnar shape having a length in the longitudinal direction of the heating region 610.

In an optional embodiment, the heat dissipation part 630 may define the side surface of the heating region 610.

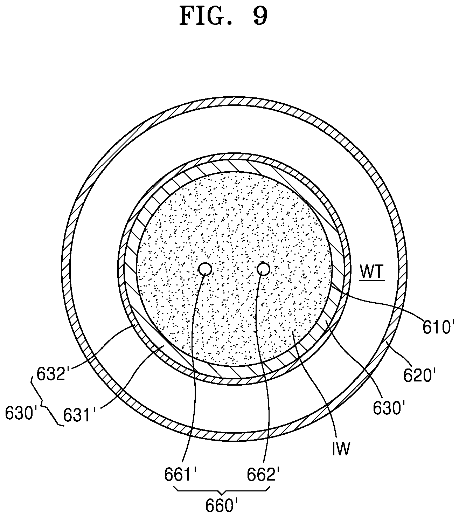

FIG. 9 is a view illustrating a modified example of FIG. 8.

Referring to FIG. 9, a heat dissipation part 630' may include a first insulating layer 631' and a heat dissipation member 632' on a side surface facing the electrolyzed water IW.

Although not shown in the drawing, the heat dissipation part 630' may also include a second insulating layer (not shown) on a side surface facing the fluid WT.

Specific materials of the first insulating layer 631' and the second insulating layer (not shown) are the same as those described in the above embodiments, and thus detailed descriptions thereof will be omitted.

The heat dissipation member 632' may be formed of a material having high thermal conductivity, and may be formed to include, for example, a metal material. In a specific example, the heat dissipation member 632' may include iron, aluminum, stainless steel, or other alloys.

With such a structure, heat of the electrolyzed water IW heated through first and second electrodes 661' and 662' of an electrode part 660' may be effectively transferred to the heat dissipation part 630', and the efficiency of heat transfer from the heat dissipation part 630' to the fluid WT may be improved. In addition, it is possible to prevent abnormal leakage of current through the heat dissipation part 630'.

The electrode boiler device of the present embodiment may heat electrolyzed water inside the heating region through control of current applied to the electrodes of the electrode part disposed in the heating region. The heat of the electrolyzed water may be transferred to a fluid of the body part to heat the fluid. Here, the heat dissipation part is disposed between the heating region and the body part so that the heat of the electrolyzed water is transferred to the fluid through the heat dissipation part.

With such a configuration, the heat of the electrolyzed water may be effectively transferred to the fluid, which may improve fluid heating efficiency through the electrolyzed water.

In addition, the body part may be disposed on the outer side of the heating region to face the side surface of the heating region so as to overlap the electrolyzed water, for example, in a direction crossing the longitudinal direction of the heating region, and in an optional embodiment, the body part may be disposed to surround the outer side of the heating region.

Accordingly, a speed at which the heat of the electrolyzed water is transferred to the fluid of the body part may be improved, and uniformity of heating of the fluid disposed inside the body part may be improved.

In addition, in an optional embodiment, the body part is disposed to surround the heating region so that the fluid inside the body part may be circulated so as to surround the heating region, so that the heating of the fluid may be performed rapidly, and since the flow of circulation proceeds smoothly from an unheated fluid flowing into the body part to a heated fluid, the overall efficiency of the electrode boiler device may be improved, thereby improving user convenience. For example, hot water may be easily supplied to a user.

In addition, from among side surfaces of the heat dissipation part, the side surface facing the electrolyzed water includes an insulating layer, for example, an inorganic insulating layer such as ceramic, so that the flow of current or the flow of leakage current from the electrolyzed water to the heat dissipation part may be reduced or prevented. In addition, the use stability of the user may be increased.

In addition, the heating region may be formed in a columnar shape, and the heat dissipation part may be formed to surround the heating region. The body part is formed to surround the heat dissipation part, and the fluid inside the body part may be formed to surround the heat dissipation part.

With such a structure, the heat from the electrolyzed water heated through the electrode part may be sequentially and smoothly transferred to the heat dissipation part and the fluid.

As a result, the electrode boiler device having high thermal efficiency characteristics may be easily implemented.

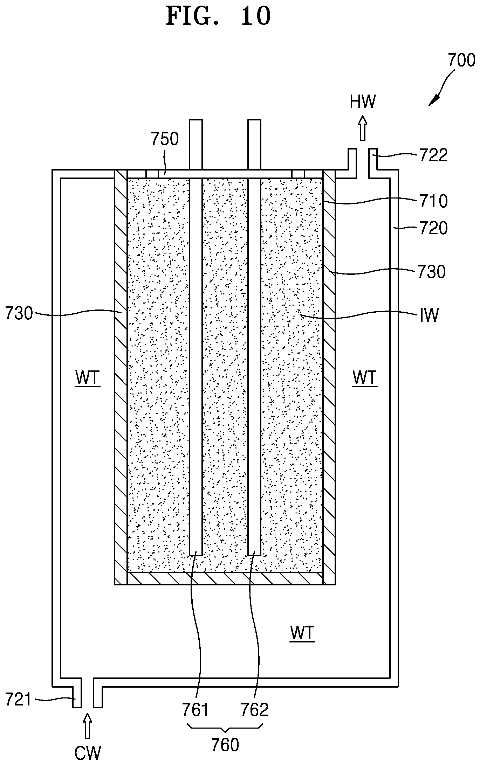

FIG. 10 is a schematic view illustrating an electrode boiler device according to another embodiment of the present disclosure.

Referring to FIG. 10, an electrode boiler device 700 of the present embodiment may include a heating region 710, a body part 720, an electrode part 760, and a heat dissipation part 730.

For convenience of description, differences from the above-described embodiments will be mainly described.

An electrolyzed water IW may be disposed inside the heating region 710.

The heating region 710 may have a length, and may have a shape similar to, for example, a column. In a specific example, the heating region 710 may include a curved outer surface, and in an optional embodiment, the heating region 710 may have a shape similar to a cylinder.

The heating region 710 may include an upper surface, a lower surface, and a side surface, of which at least the side surface may be defined by the heat dissipation part 730 as an optional embodiment.

In another example, a separate housing defining the heating region 710 may be provided.

Further details of the heating region 710 are the same as those described in the above-described embodiments or may be modified and applied within a similar range as necessary, and thus detailed descriptions thereof will be omitted.

In an optional embodiment, a cover part 750 may be disposed on one side of the heating region 710, and the electrode part 760 may be formed, for example, to be connected to the heating region 710 from an outer side of the cover part 750.

Through the cover part 750, it is possible to reduce or prevent unwanted exposure of the electrolyzed water IW to the outside, and thereby prevent safety accidents such as electric shock caused by the electrolyzed water IW.

The body part 720 may be formed such that a fluid WT may be disposed therein to overlap the electrolyzed water IW in at least one region. The fluid WT may include various types, for example, a liquid or a gas.

The body part 720 may be formed to surround the heating region 710. For example, the body part 720 may have a length in the same direction as a longitudinal direction of the heating region 710, and may have a hollow columnar shape, and the fluid WT may be disposed inside the body part 720.

Additionally, the body part 720 may be formed to correspond to the side surface and a bottom surface of the heating region 710. For example, the body part 720 may be formed to be longer than the heating region 710.

The fluid WT may be disposed to surround the heating region 710 and may be disposed in a shape surrounding the electrolyzed water IW.

In an optional embodiment, the fluid WT may surround an outer surface of the heating region 710 and may correspond to a bottom of the heating region 710. In a specific example, the fluid WT may be formed to correspond to and be connected to both an outer region and a bottom region of the heating region 710.

Accordingly, the fluid WT overlaps the heating region 710 on the outer surface and also on the bottom surface, so that heat transfer efficiency through the electrolyzed water IW may be increased.

The electrode part 760 may be disposed in the heating region 710. In addition, the electrode part 760 may be disposed to overlap the electrolyzed water IW to heat the electrolyzed water IW in the heating region 710.

In addition, the electrode part 760 may overlap the fluid WT disposed inside the body part 720 in one direction.

The electrode part 760 may include a plurality of electrodes.

For example, the electrode part 760 may include a first electrode 761 and a second electrode 762.

In a specific example, the first electrode 761 and the second electrode 762 may each be formed to be in contact with the electrolyzed water IW. Although not shown in the drawing, current may be applied to the first electrode 761 and the second electrode 762 under control of an electrode control part (not shown), and the applied current may be controlled through a control part (not shown).

The electrolyzed water IW may be heated by the current applied to the first and second electrodes 761 and 762. The heat of the electrolyzed water IW may be transferred to the fluid WT of the body part 720, and the fluid WT may be heated.

The first electrode 761 and the second electrode 762 may have a shape in which the first electrode 761 and the second electrode 762 are spaced apart from each other at an interval in an inner space of the heating region 710.

For example, the first electrode 761 and the second electrode 762 may have shapes elongated while being spaced apart from each other at an interval in the inner space of the heating region 710, and may each have a linear shape. One end portion formed to extend from each of the first electrode 761 and the second electrode 762 may be formed to be spaced apart from a region of the heating region 710, specifically, an inner surface and the bottom surface of the heating region 710.

Although not shown in the drawing, the first electrode 761 and the second electrode 762 may be connected to an insulating member (not shown) when the first electrode 761 and the second electrode 762 are connected to the cover part 750. A detailed description thereof is the same as that provided in the above-described embodiments, and thus will be omitted.

A support member (not shown) may be disposed to support the electrode part 760, and for example, the support member (not shown) may be formed to support the first and second electrodes 761 and 762 of the electrode part 760. A detailed description thereof is the same as that provided in the above-described embodiments, and thus will be omitted.

In an optional embodiment, an insulating cap (not shown) may be disposed on an upper side of the cover part 750, for example, on a surface of the cover part 750, which is opposite to a region facing the heating region 710 among regions of the cover part 750.

The heat dissipation part 730 may be disposed between the heating region 710 and the body part 720.

The heat dissipation part 730 may be located between the electrolyzed water IW disposed in the heating region 710 and the fluid WT disposed in the body part 720. In addition, the heat dissipation part 730 may be formed to be spaced apart from the electrode part 760.

The heat dissipation part 730 may be formed to surround the outer side of the heating region 710. For example, the heat dissipation part 730 may be disposed on an outer side of the electrolyzed water IW to surround at least one region of the electrolyzed water IW in a longitudinal direction.

The heat dissipation part 730 may have various shapes, and may have a columnar shape having a length in the longitudinal direction of the heating region 710.

In an optional embodiment, the heat dissipation part 730 may define the side surface of the heating region 710.

In addition, in an additional example, the heat dissipation part 730 may also define the bottom surface of the heating region 710.

FIG. 9 is a view illustrating a modified example of FIG. 8.

Although not shown in the drawing, the heat dissipation part 730 may have the same structure as that shown in FIG. 9 described above.

The electrode boiler device of the present embodiment may heat electrolyzed water inside the heating region through control of current applied to the electrodes of the electrode part disposed in the heating region. The heat of the electrolyzed water may be transferred to a fluid of the body part to heat the fluid. Here, the heat dissipation part is disposed between the heating region and the body part so that the heat of the electrolyzed water is transferred to the fluid through the heat dissipation part.

With such a configuration, the heat of the electrolyzed water may be effectively transferred to the fluid, which may improve fluid heating efficiency through the electrolyzed water.

In addition, the body part may be disposed on the outer side of the heating region to face the side surface of the heating region so as to overlap the electrolyzed water, for example, in a direction crossing the longitudinal direction of the heating region, and in an optional embodiment, the body part may be disposed to surround the outer side of the heating region.

Accordingly, a speed at which the heat of the electrolyzed water is transferred to the fluid of the body part may be improved, and uniformity of heating of the fluid disposed inside the body part may be improved.

In addition, in an optional embodiment, the body part is disposed to surround the heating region so that the fluid inside the body part may be circulated so as to surround the heating region, so that the heating of the fluid may be performed rapidly, and since the flow of circulation proceeds smoothly from an unheated fluid flowing into the body part to a heated fluid, the overall efficiency of the electrode boiler device may be improved, thereby improving user convenience. For example, hot water may be easily supplied to a user.

In addition, from among side surfaces of the heat dissipation part, the side surface facing the electrolyzed water includes an insulating layer, for example, an inorganic insulating layer such as ceramic, so that the flow of current or the flow of leakage current from the electrolyzed water to the heat dissipation part may be reduced or prevented. In addition, the use stability of the user may be increased.

In addition, the heating region may be formed in a columnar shape, and the heat dissipation part may be formed to surround the heating region. The body part is formed to surround the heat dissipation part, and the fluid inside the body part may be formed to surround the heat dissipation part.

In addition, the fluid may be disposed to correspond to the bottom of the heating region, so that fluid heating efficiency characteristics through the heating region may be improved.

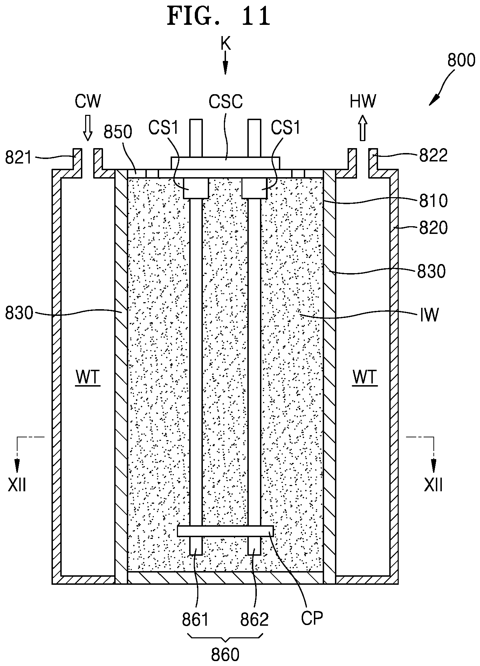

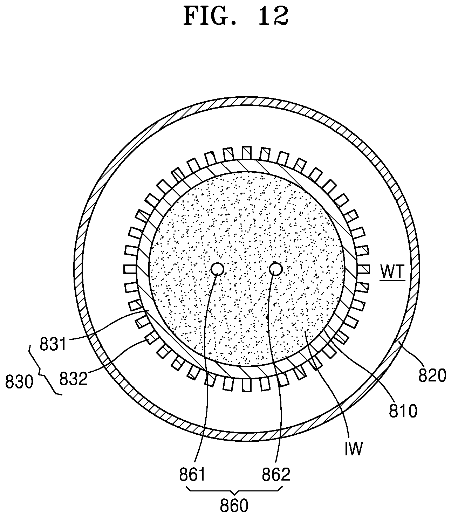

FIG. 11 is a schematic view illustrating an electrode boiler device according to another embodiment of the present disclosure, and FIG. 12 is a cross-sectional view taken along line XII-XII of FIG. 11.

Referring to FIGS. 11 and 12, an electrode boiler device 800 of the present embodiment may include a heating region 810, a body part 820, an electrode part 860, and a heat dissipation part 830.

For convenience of description, differences from the above-described embodiments will be mainly described.

An electrolyzed water IW may be disposed inside the heating region 810.

The heating region 810 may have a length, and may have a shape similar to, for example, a column. In a specific example, the heating region 810 may include a curved outer surface, and in an optional embodiment, the heating region 810 may have a shape similar to a cylinder.

The heating region 810 may include an upper surface, a lower surface, and a side surface, of which at least the side surface may be defined by the heat dissipation part 830 as an optional embodiment.

In another example, a separate housing defining the heating region 810 may be provided.

Further details of the heating region 810 are the same as those described in the above-described embodiments or may be modified and applied within a similar range as necessary, and thus detailed descriptions thereof will be omitted.

In an optional embodiment, a cover part 850 may be disposed on one side of the heating region 810, and the electrode part 860 may be formed, for example, to be connected to the heating region 810 from an outer side of the cover part 850.

Through the cover part 850, it is possible to reduce or prevent unwanted exposure of the electrolyzed water IW to the outside, and thereby prevent safety accidents such as electric shock caused by the electrolyzed water IW.

A coupling member (not shown) may be used so that the cover part 850 is disposed on an upper side of the heating region 810, or the cover part 850 may be coupled to a housing (not shown) defining the upper side of the heating region 810. In another example, when the heat dissipation part 830 is formed to define the upper side of the heating region 810, one region of the heat dissipation part 830 may be coupled to the cover part 850 through the coupling member.

The body part 820 may be formed such that a fluid WT may be disposed therein to overlap the electrolyzed water IW in at least one region. The fluid WT may include various types, for example, a liquid or a gas.

The body part 820 may be formed to surround the heating region 810. For example, the body part 820 may have a length in the same direction as a longitudinal direction of the heating region 810, and may have a hollow columnar shape, and the fluid WT may be disposed inside the body part 820.

Additionally, the body part 820 may be formed to correspond to the side surface and a bottom surface of the heating region 810. For example, the body part 820 may be formed to be longer than the heating region 810.

The fluid WT may be disposed to surround the heating region 810 and may be disposed in a shape surrounding the electrolyzed water IW.

In an optional embodiment, the fluid WT may be formed to surround an outer surface of the heating region 810.

The body part 820 may have various shapes, and may include at least an inlet 821 for inflowing the fluid WT and an outlet 822 for discharging the fluid WT, and as illustrated in the drawing, the inlet 821 and the outlet 822 may be formed to face the same direction, for example, to face upward based on FIG. 11. However, in another example, the inlet 821 and the outlet 822 may also be formed to face different directions.

The electrode part 860 may be disposed in the heating region 810. In addition, the electrode part 860 may be disposed to overlap the electrolyzed water IW to heat the electrolyzed water IW in the heating region 810.

In addition, the electrode part 860 may overlap the fluid WT disposed inside the body part 820 in one direction.

The electrode part 860 may include a plurality of electrodes.

For example, the electrode part 860 may include a first electrode 861 and a second electrode 862.

In a specific example, the first electrode 861 and the second electrode 862 may each be formed to be in contact with the electrolyzed water IW. Although not shown in the drawing, current may be applied to the first electrode 861 and the second electrode 862 under control of an electrode control part (not shown), and the applied current may be controlled through a control part (not shown).

The electrolyzed water IW may be heated by the current applied to the first and second electrodes 861 and 862 of the electrode part 860. The heat of the electrolyzed water IW may be transferred to the fluid WT of the body part 820, and the fluid WT may be heated.

The first electrode 861 and the second electrode 862 may have a shape in which the first electrode 861 and the second electrode 862 are spaced apart from each other at an interval in an inner space of the heating region 810.

For example, the first electrode 861 and the second electrode 862 may have shapes elongated while being spaced apart from each other at an interval in the inner space of the heating region 810, and may each have a linear shape. One end portion formed to extend from each of the first electrode 861 and the second electrode 862 may be formed to be spaced apart from a region of the heating region 810, specifically, an inner surface and the bottom surface of the heating region 810.

In an optional embodiment, the first electrode 861 and the second electrode 862 may be connected to a first insulating member CS1 and a second insulating member CS2 when the first electrode 861 and the second electrode 862 are connected to the cover part 850. A detailed description thereof is the same as that provided in the above-described embodiments, and thus will be omitted.

In an optional embodiment, a support member CP may be disposed to support the electrode part 860, and for example, the support member CP may be formed to support the first and second electrodes 861 and 862 of the electrode part 860. A detailed description thereof is the same as that provided in the above-described embodiments, and thus will be omitted.

In an optional embodiment, an insulating cap CSC may be disposed on an upper side of the cover part 850, for example, on a surface of the cover part 850, which is opposite to a region facing the heating region 810 among regions of the cover part 850.

The heat dissipation part 830 may be disposed between the heating region 810 and the body part 820.

The heat dissipation part 830 may be located between the electrolyzed water IW disposed in the heating region 810 and the fluid WT disposed in the body part 820. In addition, the heat dissipation part 830 may be formed to be spaced apart from the electrode part 860.

The heat dissipation part 830 may be formed to surround an outer side of the heating region 810. For example, the heat dissipation part 830 may be disposed on an outer side of the electrolyzed water IW to surround at least one region of the electrolyzed water IW in a longitudinal direction.

The heat dissipation part 830 may have various shapes, and may be formed in a column shape to have a length in a longitudinal direction of the heating region 810.

In an optional embodiment, the heat dissipation part 830 may define the side surface of the heating region 810.

In addition, in an additional example, the heat dissipation part 830 may also define the bottom surface of the heating region 810.

The heat dissipation part 830 may have various shapes, and may include, for example, a base 831 and a heat dissipation protrusion 832.

The base 831 may be formed in a shape surrounding the heating region 810, and may have a shape similar to, for example, a cylinder.

A plurality of heat dissipation protrusions 832 may be provided, may be connected to the base 831, and may protrude from the base 831 toward the fluid WT.

The efficiency of heat transfer from the heat dissipation part 830 to the fluid WT may be improved through the plurality of heat dissipation protrusions 832.

In an optional embodiment, the plurality of heat dissipation protrusions 832 may have a shape extending in one direction and may have regions spaced apart from each other.

In an optional embodiment, each of the plurality of heat dissipation protrusions 832 may have a shape elongated in a longitudinal direction of the heat dissipation part 830, and may have a length in a direction parallel to the longitudinal direction of the heat dissipation part 830, for example, a longitudinal direction of the base 831.

In addition, in another example, each of the plurality of heat dissipation protrusions 832 may have a length in a direction that is not parallel to the longitudinal direction of the base 831 and has an acute or obtuse angle.

In addition, in another example, each of the plurality of heat dissipation protrusions 832 may be formed to be curved in the longitudinal direction of the base 831.

The heat dissipation part 830 may be formed of a material having high thermal conductivity, and may be formed to include, for example, a metal material. Heat of the electrolyzed water IW may be easily transferred to the fluid WT through the heat dissipation part 830.

In a specific example, the heat dissipation part 830 may include iron, aluminum, stainless steel, or other alloys.

In addition, in an optional embodiment, the heat dissipation part 830 may include an insulating layer (not shown) on one side facing the electrolyzed water IW, and may also include an insulating layer (not shown) on one side facing the fluid WT. This may reduce or prevent current from flowing through the heat dissipation part 830 from the electrolyzed water IW.

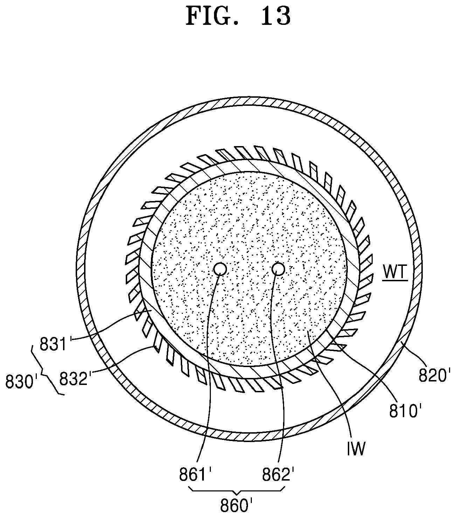

FIGS. 13 to 15 are views illustrating modified examples of FIG. 12.

For convenience of description, differences from the above-described embodiments will be mainly described.

Referring to FIG. 13, a heat dissipation part 830' may include a base 831' and a heat dissipation protrusion 832'.

The base 831' may be formed in a shape surrounding a heating region 810' in which an electrode part 860' is disposed, and may have a shape similar to, for example, a cylinder.

A plurality of heat dissipation protrusions 832' may be provided, may be connected to the base 831', and may protrude from the base 831' toward the fluid WT.

The efficiency of heat transfer to the fluid WT may be improved through the plurality of heat dissipation protrusions 832'.

Each of the plurality of heat dissipation protrusions 832' may have a shape inclined with respect to an outer circumferential surface of the base 831'. For example, each of the plurality of heat dissipation protrusions 832' may be formed to have an acute angle or an obtuse angle with respect to the outer circumferential surface of the base 831'.

In addition, in a specific example, each of the plurality of heat dissipation protrusions 832' may have a shape inclined in the same direction when each of the plurality of heat dissipation protrusions 832' has the shape inclined with respect to the outer circumferential surface of the base 831'. In an example, as shown in FIG. 13, each of the plurality of heat dissipation protrusions 832' may have a shape inclined in a counterclockwise direction with respect to the outer circumferential surface of the base 831'.

With such a structure, heat exchange between the heat dissipation protrusion 832' and the fluid WT may be smoothly performed.

In addition, the fluid WT may flow in the direction in which heat dissipation protrusion 832' is inclined, so that the fluid WT may be easily moved or convection in an inner space of a body part 820' to improve the uniformity of heating.

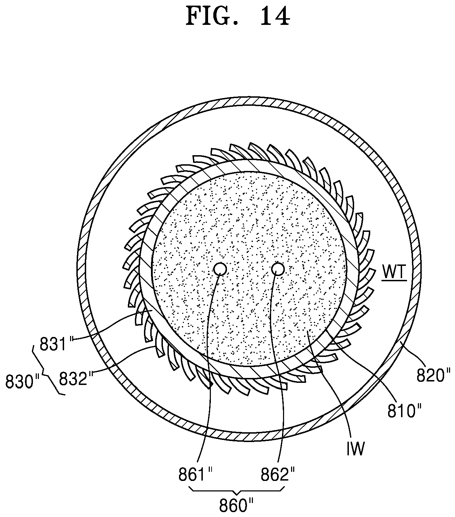

Referring to FIG. 14, a heat dissipation part 830" may include a base 831" and a heat dissipation protrusion 832".

The base 831" may be formed in a shape surrounding a heating region 810" in which an electrode part 860" is disposed, and may have a shape similar to, for example, a cylinder.

A plurality of heat dissipation protrusions 832" may be provided, may be connected to the base 831", and may protrude from the base 831" toward the fluid WT.

The efficiency of heat transfer to the fluid WT may be improved through the plurality of heat dissipation protrusions 832".

Each of the plurality of heat dissipation protrusions 832" may be formed to have a curve with respect to an outer circumferential surface of the base 831". For example, each of the plurality of heat dissipation protrusions 832" may be formed to have a curved shape convex with respect to the outer circumferential surface of the base 831".

With such a structure, heat exchange between the heat dissipation protrusion 832" and the fluid WT may be smoothly performed.

In addition, the fluid WT may flow in a direction in which the heat dissipation protrusion 832" is curved, so that the fluid WT may be easily moved or convection in an inner space of a body part 820" to improve the uniformity of heating.

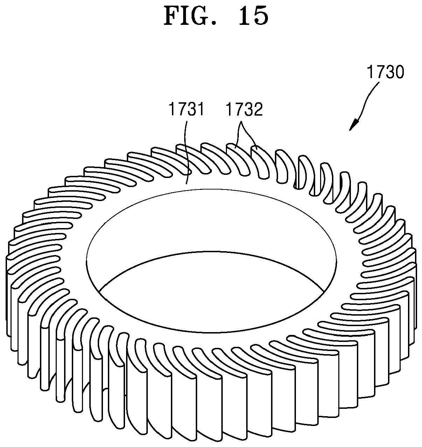

FIG. 15 may be a perspective view illustrating one region of a heat dissipation part 1730, as a modified example of FIG. 12.

Referring to FIG. 15, the heat dissipation part 1730 may include a base 1731 and a heat dissipation protrusion 1732.

For convenience of description, FIG. 15 illustrates one region of the heat dissipation part 1730, and for example, only one region of the heat dissipation part 1730 in a longitudinal direction is illustrated.

The heat dissipation part 1730 may have a shape similar to a hollow column, and in an optional embodiment, an inner side of the base 1731 may be formed to define a heating region.

The heat dissipation protrusion 1732 may have a shape protruding from an outer circumferential surface of the base 1731 and may be provided in plural spaced apart from each other.

In an optional embodiment, the heat dissipation protrusion 1732 may protrude to have an acute angle or an obtuse angle with the outer circumferential surface of the base 1731, and may be formed to include a curve with respect to the outer circumferential surface of the base 1731.

The electrode boiler device of the present embodiment may heat electrolyzed water inside the heating region through control of current applied to the electrodes of the electrode part disposed in the heating region. The heat of the electrolyzed water may be transferred to a fluid of the body part to heat the fluid. Here, the heat dissipation part is disposed between the heating region and the body part so that the heat of the electrolyzed water is transferred to the fluid through the heat dissipation part.

With such a configuration, the heat of the electrolyzed water may be effectively transferred to the fluid, which may improve fluid heating efficiency through the electrolyzed water.

In addition, the body part may be disposed on the outer side of the heating region to face the side surface of the heating region so as to overlap the electrolyzed water, for example, in a direction crossing the longitudinal direction of the heating region, and in an optional embodiment, the body part may be disposed to surround the outer side of the heating region.

Accordingly, a speed at which the heat of the electrolyzed water is transferred to the fluid of the body part may be improved, and uniformity of heating of the fluid disposed inside the body part may be improved.

In addition, in an optional embodiment, the body part is disposed to surround the heating region so that the fluid inside the body part may be circulated so as to surround the heating region, so that the heating of the fluid may be performed rapidly, and since the flow of circulation proceeds smoothly from an unheated fluid flowing into the body part to a heated fluid, the overall efficiency of the electrode boiler device may be improved, thereby improving user convenience. For example, hot water may be easily supplied to a user.

In addition, from among side surfaces of the heat dissipation part, the side surface facing the electrolyzed water includes an insulating layer, for example, an inorganic insulating layer such as ceramic, so that the flow of current or the flow of leakage current from the electrolyzed water to the heat dissipation part may be reduced or prevented. In addition, the use stability of the user may be increased.

In addition, the heating region may be formed in a columnar shape, and the heat dissipation part may be formed to surround the heating region. The body part is formed to surround the heat dissipation part, and the fluid inside the body part may be formed to surround the heat dissipation part.

The heat dissipation part includes a base and a plurality of heat dissipation protrusions, and the heat dissipation protrusion may have a shape protruding toward the fluid. This may improve heat transfer characteristics for transferring heat to the fluid.

In addition, in an optional embodiment, the heat dissipation protrusions have an inclined shape so as to have an acute angle or an obtuse angle with respect to the outer circumferential surface of the base, and have inclinations in one direction so that the fluid may smoothly flow.

In addition, in an additional example, the heat dissipation protrusions are formed such that the heat dissipation protrusions have a curve to reduce or prevent irregular flow from occurring while increasing an area in which the fluid is in contact with the heat dissipation protrusion, thereby improving heating uniformity of the fluid.

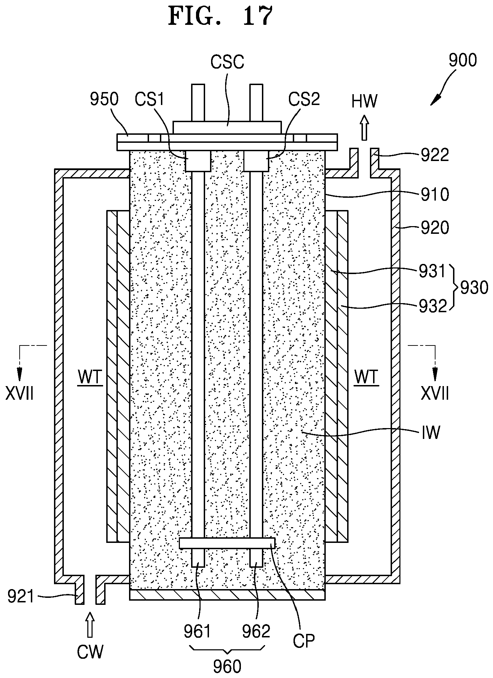

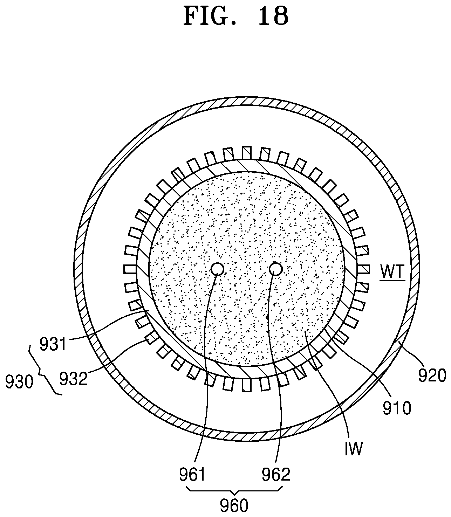

FIG. 17 is a schematic view illustrating an electrode boiler device according to another embodiment of the present disclosure, and FIG. 18 is a cross-sectional view taken along line XVII-XVII of FIG. 17.

Referring to FIGS. 17 and 18, an electrode boiler device 900 of the present embodiment may include a heating region 910, a body part 920, an electrode part 960, and a heat dissipation part 930.

For convenience of description, differences from the above-described embodiments will be mainly described.

An electrolyzed water IW may be disposed inside the heating region 910.

The heating region 910 may have a length, and may have a shape similar to, for example, a column. In a specific example, the heating region 910 may include a curved outer surface, and in an optional embodiment, the heating region 910 may have a shape similar to a cylinder.

The heating region 910 may include an upper surface, a lower surface, and a side surface, of which the side surface may have at least one region defined by the heat dissipation part 930 as an optional embodiment.

In another example, a separate housing defining the heating region 910 may be provided.

Further details of the heating region 910 are the same as those described in the above-described embodiments or may be modified and applied within a similar range as necessary, and thus detailed descriptions thereof will be omitted.

In an optional embodiment, a cover part 950 may be disposed on one side of the heating region 910, and the electrode part 960 may be formed, for example, to be connected to the heating region 910 from an outer side of the cover part 950.

Through the cover part 950, it is possible to reduce or prevent unwanted exposure of the electrolyzed water IW to the outside, and thereby prevent safety accidents such as electric shock caused by the electrolyzed water IW.

A coupling member(not shown) may be used so that the cover part 950 is disposed on an upper side of the heating region 910, or the cover part 950 may be coupled to a housing (not shown) defining the upper side of the heating region 910. In another example, when the heat dissipation part 930 is formed to define the upper side of the heating region 910, one region of the heat dissipation part 930 may be coupled to the cover part 950 through the coupling member (not shown).

The body part 920 may be formed such that a fluid WT may be disposed therein to overlap the electrolyzed water IW in at least one region. The fluid WT may include various types, for example, a liquid or a gas.

The body part 920 may be formed to surround the heating region 910. For example, the body part 920 may have a length in the same direction as a longitudinal direction of the heating region 910, and may have a hollow columnar shape, and the fluid WT may be disposed inside the body part 920.

In an optional embodiment, the body part 920 may be formed to have a smaller length than the heating region 910.

For example, the body part 920 may be formed such that both sides thereof are short so as not to correspond to both a lower region of the heating region 910, in which an end portion of the electrode part 960 is directed, and an upper region of the heating region 910, which is opposite to the lower region and faces the cover part 950.

Accordingly, heating and temperature maintenance of the fluid WT may be effectively performed in the body part 920 even when an unheated or low-temperature heating region is generated in the upper or lower region of the heating region 910.

The body part 920 may have various shapes, and may include at least an inlet 921 for inflowing the fluid WT and an outlet 922 for discharging the fluid WT, and the inlet 921 and the outlet 922 may face in directions shown in the drawing, and for example, the inlet 921 and the outlet 922 may be formed to be staggered with respect to each other, facing upwardly and downwardly, respectively, based on FIG. 17. However, in another example, the inlet 921 and the outlet 922 may also face the same direction, for example, the inlet 921 and the outlet 922 may also be formed in a surface in the same direction as a direction in which the cover part 950 is formed.

The electrode part 960 may be disposed in the heating region 910. In addition, the electrode part 960 may be disposed to overlap the electrolyzed water IW to heat the electrolyzed water IW in the heating region 910.

In addition, the electrode part 960 may overlap the fluid WT disposed inside the body part 920 in one direction.

The electrode part 960 may include a plurality of electrodes.

For example, the electrode part 960 may include a first electrode 961 and a second electrode 962.

In a specific example, the first electrode 961 and the second electrode 962 may each be formed to be in contact with the electrolyzed water IW. Although not shown in the drawing, current may be applied to the first electrode 961 and the second electrode 962 under control of an electrode control part (not shown), and the applied current may be controlled through a control part (not shown).

The electrolyzed water IW may be heated by the current applied to the first and second electrodes 961 and 962 of the electrode part 960. The heat of the electrolyzed water IW may be transferred to the fluid WT of the body part 920, and the fluid WT may be heated.

The first electrode 961 and the second electrode 962 may have a shape in which the first electrode 961 and the second electrode 962 are spaced apart from each other at an interval in an inner space of the heating region 910.

For example, the first electrode 961 and the second electrode 962 may have shapes elongated while being spaced apart from each other at an interval in the inner space of the heating region 910, and may each have a linear shape. One end portion formed to extend from each of the first electrode 961 and the second electrode 962 may be formed to be spaced apart from a region of the heating region 910, specifically, an inner surface and the bottom surface of the heating region 910.

In an optional embodiment, the first electrode 961 and the second electrode 962 may be connected to a first insulating member CS1 and a second insulating member CS2 when the first electrode 961 and the second electrode 962 are connected to the cover part 950. A detailed description thereof is the same as that provided in the above-described embodiments, and thus will be omitted.

In an optional embodiment, a support member CP may be disposed to support the electrode part 960, and for example, the support member CP may be formed to support the first and second electrodes 961 and 962 of the electrode part 960. A detailed description thereof is the same as that provided in the above-described embodiments, and thus will be omitted.

In an optional embodiment, an insulating cap CSC may be disposed on an upper side of the cover part 950, for example, on a surface of the cover part 950, which is opposite to a region facing the heating region 910 among regions of the cover part 950.

The heat dissipation part 930 may be disposed between the heating region 910 and the body part 920.

The heat dissipation part 930 may be located between the electrolyzed water IW disposed in the heating region 910 and the fluid WT disposed in the body part 920. In addition, the heat dissipation part 930 may be formed to be spaced apart from the electrode part 960.

The heat dissipation part 930 may be formed to surround an outer side of the heating region 910. For example, the heat dissipation part 930 may be disposed on an outer side of the electrolyzed water IW to surround at least one region of the electrolyzed water IW in a longitudinal direction.

The heat dissipation part 930 may have various shapes, and may be formed in a column shape so as to have a length in the longitudinal direction of the heating region 910.

In an optional embodiment, the heat dissipation part 930 may define at least one region of the side surface of the heating region 910.

The heat dissipation part 930 may have various shapes, and may include, for example, a base 931 and a heat dissipation protrusion 932.

The base 931 may be formed in a shape surrounding the heating region 910, and may have a shape similar to, for example, a cylinder.

A plurality of heat dissipation protrusions 932 may be provided, may be connected to the base 931, and may protrude from the base 931 toward the fluid WT.

The efficiency of heat transfer from the heat dissipation part 930 to the fluid WT may be improved through the plurality of heat dissipation protrusions 932.

In an optional embodiment, the plurality of heat dissipation protrusions 932 may have a shape extending in one direction and may have regions spaced apart from each other.

In an optional embodiment, each of the plurality of heat dissipation protrusions 932 may have a shape elongated in a longitudinal direction of the heat dissipation part 930, and may have a length in a direction parallel to the longitudinal direction of the heat dissipation part 930, for example, a longitudinal direction of the base 931.

In addition, in another example, each of the plurality of heat dissipation protrusions 932 may have a length in a direction that is not parallel to the longitudinal direction of the base 931 and has an acute or obtuse angle.

In addition, in another example, each of the plurality of heat dissipation protrusions 932 may be formed to be curved in the longitudinal direction of the base 931.

The heat dissipation part 930 may be formed of a material having high thermal conductivity, and may be formed to include, for example, a metal material. Heat of the electrolyzed water IW may be easily transferred to the fluid WT through the heat dissipation part 930.

In a specific example, the heat dissipation part 930 may include iron, aluminum, stainless steel, or other alloys.

In addition, in an optional embodiment, the heat dissipation part 930 may include an insulating layer (not shown) on one side facing the electrolyzed water IW, and may also include an insulating layer (not shown) on one side facing the fluid WT. This may reduce or prevent current from flowing through the heat dissipation part 930 from the electrolyzed water IW.

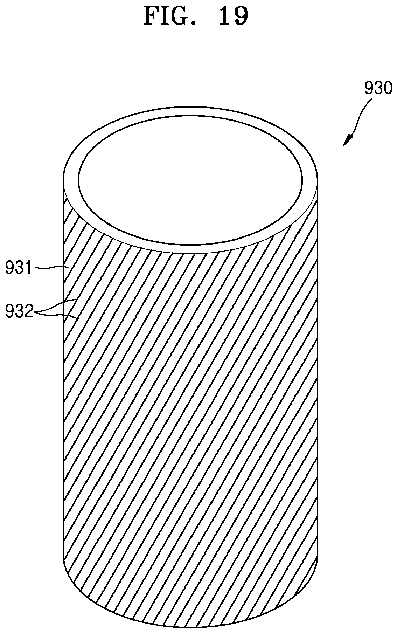

FIG. 19 is a perspective view illustrating an example of the heat dissipation part of FIG. 17.

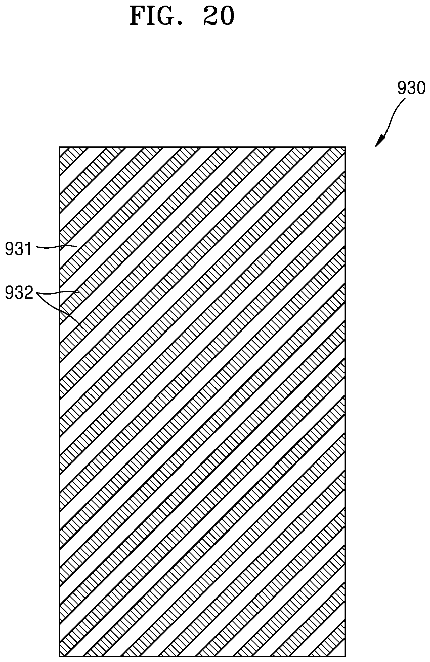

FIG. 20 is a front view viewed from the front of FIG. 19.

Referring to FIGS. 19 and 20, in an example, the heat dissipation part 930 may have a shape similar to an entirely hollow column.

The heat dissipation part 930 may include the base 931 and the heat dissipation protrusion 932.

The plurality of heat dissipation protrusions 932 may have a length, and may be formed to extend to have an acute angle or an obtuse angle without being parallel to the longitudinal direction of the base 931. Such an extending direction of the heat dissipation protrusion 932 may allow the fluid WT to flow easily in an outer space of the heat dissipation part 930 when the heat dissipation protrusion 932 and the fluid WT are disposed to be in contact with each other, thereby improving a heat transfer effect.

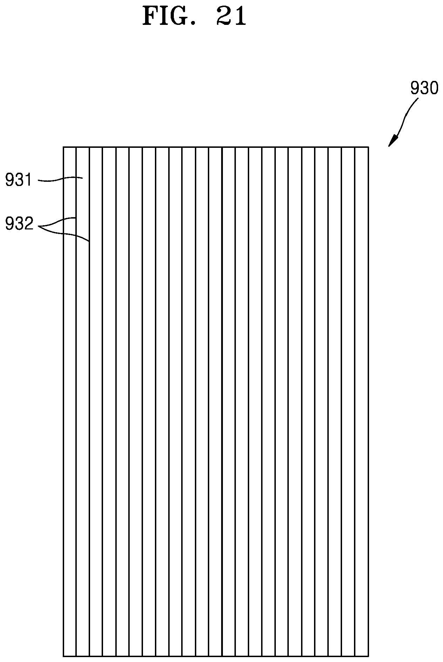

FIGS. 21 to 24 are views illustrating modified examples of FIG. 20.

Referring to FIG. 21, the heat dissipation part 930 may include the base 931 and the heat dissipation protrusion 932.

The plurality of heat dissipation protrusions 932 may have a length, and may be formed to extend in parallel to the longitudinal direction of the base 931. When the base 931 and the heat dissipation protrusions 932 are formed, for example, integrally when forming the heat dissipation part 930, manufacturing convenience may be improved.

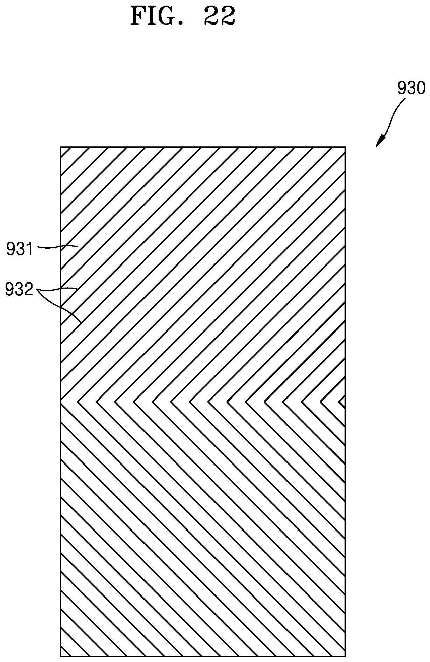

Referring to FIG. 22, the heat dissipation part 930 may include the base 931 and the heat dissipation protrusion 932.

The plurality of heat dissipation protrusions 932 may have a length, and may be formed to extend to have an acute angle or an obtuse angle without being parallel to the longitudinal direction of the base 931.

In addition, each of the heat dissipation protrusions 932 may have a shape bent at least once, for example, a shape inclined in one direction and inclined in the other direction when viewed from an outer surface of the base 931.

With such a bent shape, even when an outer space of the heat dissipation part 930 has a region having a relatively small width, flows are generated up and down and left and right, so that the heating of the fluid WT may be effectively performed, and non-uniform heating of the fluid WT in an inner space of the body part 920 may be reduced or prevented.

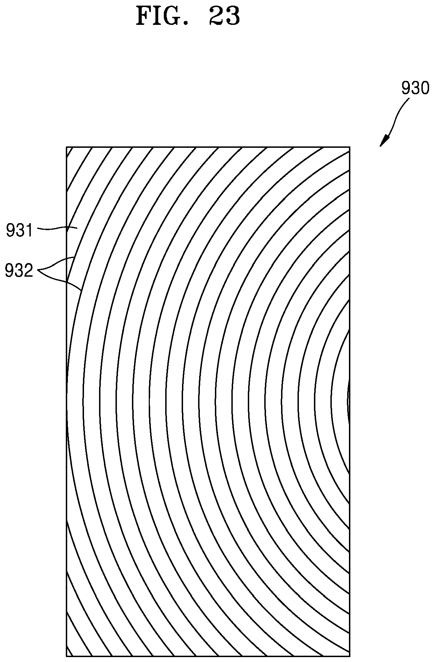

Referring to FIG. 23, the heat dissipation part 930 may include the base 931 and the heat dissipation protrusion 932.

The plurality of heat dissipation protrusions 932 may have a length, and may be formed to extend to have an acute angle or an obtuse angle without being parallel to the longitudinal direction of the base 931.

In addition, each of the heat dissipation protrusions 932 may have a shape bent at least once, for example, a shape bent in a curved shape. This allows the plurality of heat dissipation protrusion 932 to be formed which have a shape bent in a shape convex toward a left or right side when viewed from an outer circumferential surface of the base 931.

With such a bent shape, even when an outer space of the heat dissipation part 930 has a region having a relatively small width, flows are generated up and down and left and right, so that the heating of the fluid WT may be effectively performed, and non-uniform heating of the fluid WT in an inner space of the body part 920 may be reduced or prevented.

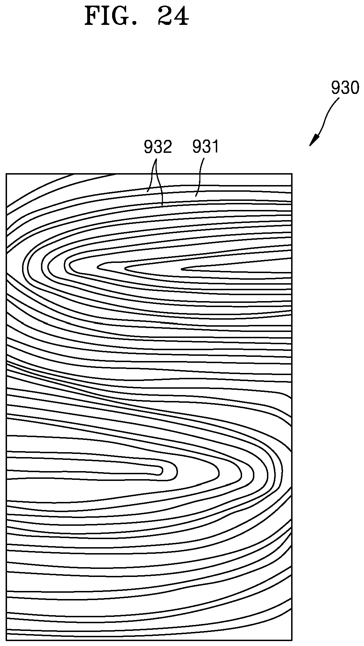

Referring to FIG. 24, the heat dissipation part 930 may include the base 931 and the heat dissipation protrusion 932.

The plurality of heat dissipation protrusions 932 may have a length, and may be formed to extend to have an acute angle or an obtuse angle without being parallel to the longitudinal direction of the base 931.

In addition, each of the heat dissipation protrusions 932 may have a shape bent at least once, for example, a shape bent in a curved shape. This allows the plurality of heat dissipation protrusion 932 to be formed which have a shape bent in a shape convex toward a left or right side when viewed from an outer circumferential surface of the base 931.

In addition, in at least one region of the outer circumferential surface of the base 931, the plurality of heat dissipation protrusions 932 may have a region having a curve convex in one direction based on the longitudinal direction of the base 931 and a region having a curve convex in a different direction, wherein the one direction may be, for example, to the left, and the different direction may be to the right.

Specifically, based on FIG. 24, in an upper region of the outer circumferential surface of the base 931, the plurality of heat dissipation protrusions 932 may have a region having a curve convex to the left, and in a lower region of the outer circumferential surface of the base 931, a plurality of heat dissipation protrusions 932 may have a region having a curve convex to the right.

In an optional embodiment, on the outer circumferential surface of the base 931, at least one of the plurality of heat dissipation protrusions 932 may have a region convex toward one side with respect to the longitudinal direction of the base 931 and a region convex in a direction opposite to the one side.

With such a bent shape, uniform flow of the fluid WT and uniformity of heating may be improved as a whole in a region surrounding the outer side of the heat dissipation part 930. In addition, by forming a smooth flow of the fluid WT in upper and lower regions in the outer side of the heat dissipation part 930 in the longitudinal direction, heating efficiency for the fluid WT may be improved.

Although not shown in the drawing, the configuration of the base 931 and the heat dissipation protrusion 932 of the heat dissipation part 930 may be variously and selectively modified, and, for example, may be modified by selectively applying the structures of FIGS. 12 to 15.

The electrode boiler device of the present embodiment may heat electrolyzed water inside the heating region through control of current applied to the electrodes of the electrode part disposed in the heating region. The heat of the electrolyzed water may be transferred to a fluid of the body part to heat the fluid. Here, the heat dissipation part is disposed between the heating region and the body part so that the heat of the electrolyzed water is transferred to the fluid through the heat dissipation part.

With such a configuration, the heat of the electrolyzed water may be effectively transferred to the fluid, which may improve fluid heating efficiency through the electrolyzed water.

In addition, the body part may be disposed on the outer side of the heating region to face the side surface of the heating region so as to overlap the electrolyzed water, for example, in a direction crossing the longitudinal direction of the heating region, and in an optional embodiment, the body part may be disposed to surround the outer side of the heating region.

Accordingly, a speed at which the heat of the electrolyzed water is transferred to the fluid of the body part may be improved, and uniformity of heating of the fluid disposed inside the body part may be improved.

In addition, in an optional embodiment, the body part is disposed to surround the heating region so that the fluid inside the body part may be circulated so as to surround the heating region, so that the heating of the fluid may be performed rapidly, and since the flow of circulation proceeds smoothly from an unheated fluid flowing into the body part to a heated fluid, the overall efficiency of the electrode boiler device may be improved, thereby improving user convenience. For example, hot water may be easily supplied to a user.

In addition, from among side surfaces of the heat dissipation part, the side surface facing the electrolyzed water includes an insulating layer, for example, an inorganic insulating layer such as ceramic, so that the flow of current or the flow of leakage current from the electrolyzed water to the heat dissipation part may be reduced or prevented. In addition, the use stability of the user may be increased.

In addition, the heating region may be formed in a columnar shape, and the heat dissipation part may be formed to surround the heating region. The body part is formed to surround the heat dissipation part, and the fluid inside the body part may be formed to surround the heat dissipation part.

The heat dissipation part includes the base and the plurality of heat dissipation protrusions, and the heat dissipation protrusion may have a shape protruding toward the fluid. This may improve heat transfer characteristics for transferring heat to the fluid.

In addition, in an optional embodiment, the heat dissipation protrusions may be formed on the outer circumferential surface of the base to have a length in one direction when viewed from the outside of the base. This may result in a smooth flow of the fluid in the outer region of the heat dissipation part, thereby reducing or preventing the fluid from being unevenly heated.

In addition, in an optional embodiment, the heat dissipation protrusions are formed to extend in a direction that is not parallel to the longitudinal direction of the base, so that the fluid may form a smooth circulating flow to surround the electrolyzed water on the outer side of the heat dissipation part.

In addition, in an optional embodiment, the heat dissipation protrusions may have a bent shape on the outer circumferential surface of the base, and may be formed to have shapes convex in different directions, specifically, to have curves convex in different directions in the upper and lower regions of the outer circumferential surface of the base to facilitate circulation in the longitudinal direction of the base through the flow in the outer side of the heat dissipation part, thereby securing effective fluid heating characteristics.

As a result, the electrode boiler device with improved thermal efficiency may be easily implemented.

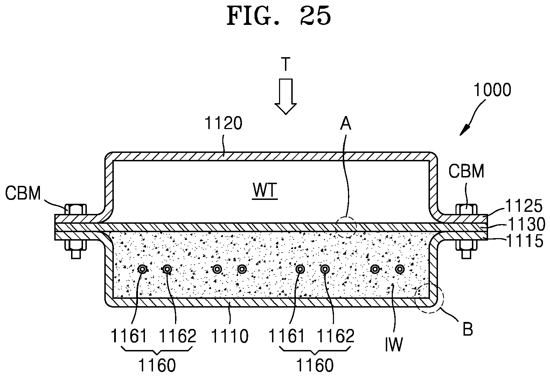

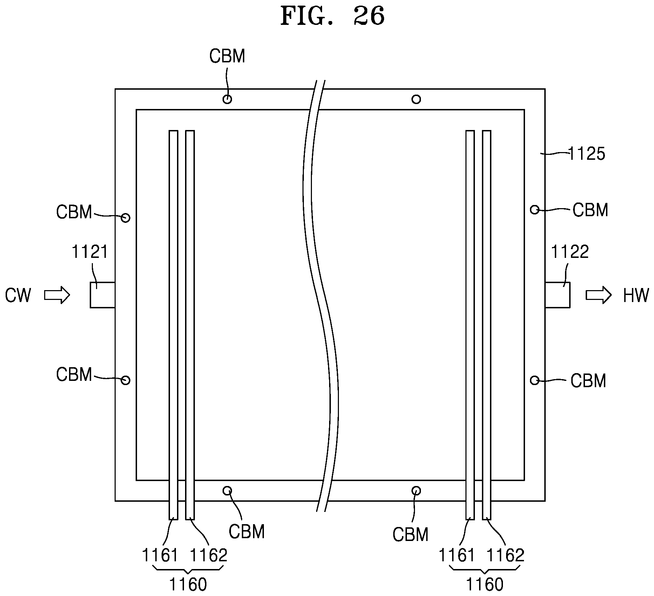

FIG. 25 is a schematic view illustrating an electrode boiler device according to an embodiment of the present disclosure, and FIG. 26 is a schematic plan view as viewed from direction T of FIG. 25.

For convenience of description, a heating part is omitted in FIG. 26.

Referring to FIGS. 25 and 26, an electrode boiler device 1000 of the present embodiment may include a heating part 1110, a body part 1120, a heat dissipation part 1130, and an electrode part 1160.

The heating part 1110 may be formed such that electrolyzed water IW is disposed therein.
In addition, the heating part 1110 may be formed such that a width or length of a region in which the electrolyzed water IW is disposed is greater than a height of the region.

For example, the heating part 1110 may have a height, and the height of the heating part 1110 may be based on a direction facing the body part 1120 from the heating part 1110. In a specific example, the height of the body part 1120 may be based on a direction facing upward from below with respect to FIG. 25.

In addition, a width and a length of the heating part 1110 are based on a direction crossing the height direction of the heating part 1110, for example, a direction orthogonal to the height direction of the heating part 1110, and in a specific example, the width and the length of the heating part 1110 may be based on a direction facing right from left with respect to FIGS. 25 and 26, and may be based on a direction facing upward from below with respect to FIG. 26.

For example, the heating part 1110 may have a shape similar to a plate that has a thickness and is widely formed.

Accordingly, the electrolyzed water IW of the heating part 1110 may effectively transfer heat to a fluid WT.

In an optional embodiment, the heating part 1110 may have an exposed shape whose upper portion is not covered. This allows heat to be easily transferred to the heat dissipation part 1130 through the electrolyzed water IW.

In addition, although not specifically illustrated in FIG. 26, the heating part 1110 may have an edge having a shape similar to a rectangular shape, like an outer shape (e.g., 1125) of the body part 1120 illustrated in FIG. 26.

The electrolyzed water IW may be of various types. For example, the electrolyzed water IW may include an electrolyte solution, specifically distilled water, filtered water, bottled water, tap water, or the like in which at least one of various types of electrolyte solutions is appropriately diluted.

As an electrolyte material included in the electrolyzed water IW, there are various types including rust inhibitors or the like that contain edible soda, chlorite, silicate, an inorganic material of polyphosphate, amines, oxyacids, or the like as main components.

The heating part 1110 may have various shapes and may be formed to control at least the entry and exit of the electrolyzed water IW. For example, the heating part 1110 may be formed such that the electrolyzed water IW does not flow out of the heating part 1110 after filling the heating part 1110 with the electrolyzed water IW, and in another example, the heating part 1110 may include a replenishing inlet (not shown) for replenishing or discharging the electrolyzed water IW.

The heating part 1110 may be formed of various materials. For example, the heating part 1110 may be formed of a durable and lightweight insulating material. In an optional embodiment, the heating part 1110 may be formed of a plastic material including various types of resins. In another optional embodiment, the heating part 1110 may include an inorganic material such as ceramic.

In addition, in another optional embodiment, the heating part 1110 may be formed of a metal material.

In another example, the heating part 1110 may include a Teflon resin that is a fluorine resin.

In an optional embodiment, from among surfaces of the heating part 1110, at least an inner surface of the heating part 1110 adjacent to the electrolyzed water IW may include an insulating layer, may include, for example, an inorganic layer, and may contain an inorganic material including ceramic.

In an optional embodiment, the heating part 1110 may have a shape similar to the outer shape of the body part 1120 to be described below.

As an example of a specific shape, the heating part 1110 may include a bottom portion and a side portion connected to the bottom portion.

In an optional embodiment, a first connection part 1115 may be formed on one side of the heating part 1110. For example, the first connection part 1115 may have a shape extending outwardly from an upper end of a side surface of the heating part 1110.

In a specific example, the first connection part 1115 may be formed to be connected to the side surface of the heating part 1110, and may have a shape extending in a direction away from the side surface so as to have a shape surrounding the side surface.

The first connection part 1115 is for coupling with the body part 1120 or the heat dissipation part 1130 to be described below and may have a width, and may have the width in a direction away from the side surface of the heating part 1110. Further details regarding the coupling will be described below.

The body part 1120 may be formed such that the fluid WT may be disposed therein to overlap the electrolyzed water IW in at least one region. The fluid WT may include various types, for example, a liquid or a gas.

In an optional embodiment, the fluid WT may include water, and for example, the electrode boiler device 1000 may include a method of using hot water.
In addition, the body part 1120 may be formed such that a width or length of a region in which the fluid WT is disposed is greater than a height of the region.

For example, the body part 1120 may have a height, and the height of the body part 1120 may be based on the direction facing the body part 1120 from the heating part 1110. In a specific example, the height of the body part 1120 may be based on the direction facing upward from below with respect to FIG. 25.

In addition, a width and a length of the body part 1120 are based on a direction crossing the height direction of the body part 1120, for example, a direction orthogonal to the height direction of the body part 1120, and in a specific example, the width and the length of the body part 1120 may be based on the direction facing right from left with respect to FIGS. 25 and 26, and may be based on the direction facing upward from below with respect to FIG. 26.

For example, the heating part 1110 may have a shape similar to a plate that has a thickness and is widely formed.

Accordingly, it is possible to efficiently accommodate the fluid WT in the body part 1120, to effectively receive heat from the electrolyzed water IW so that a heating rate for heating the fluid WT is improved, and to improve the overall efficiency of a boiler system.

In an optional embodiment, the body part 1120 may have a shape in which a lower portion, for example, a surface facing the heating part 1110 is uncovered and exposed. This allows the heat transferred to the heat dissipation part 1130 through the electrolyzed water IW to be easily transferred to the fluid WT.

The body part 1120 may have various shapes, and may include at least an inlet 1121 for inflowing the fluid WT and an outlet 1122 for discharging the fluid WT.

Specifically, an unheated fluid CW before heating, which is introduced via the inlet 1121, may be introduced, and for example, the unheated fluid CW may include water or gas at a room or low temperature.

A heated fluid HW, for example, heated water or gas may be discharged via the outlet 1122.

In a specific example, the unheated fluid CW including room temperature water, which is introduced via the inlet 1121, is introduced into the body part 1120 and then heated through the electrolyzed water IW of the heating part 1110, and the heated fluid HW including heated water may be discharged via the outlet 1122.

The body part 1120 may be formed of various materials. For example, the body part 1120 may be formed of a durable and lightweight insulating material. In an optional embodiment, the body part 1120 may be formed of a plastic material including various types of resins. In another optional embodiment, the body part 1120 may include an inorganic material such as ceramic.

In addition, in another optional embodiment, the body part 1120 may be formed of a metal material.

In another example, the body part 1120 may include a Teflon resin that is a fluorine resin.

In an optional embodiment, from among surfaces of the body part 1120, at least an inner surface of the body part 1120 adjacent to the fluid WT may include an insulating layer, may include, for example, an inorganic layer, and may contain an inorganic material including ceramic.

In an optional embodiment, a second connection part 1125 may be formed on one side of the body part 1120. In addition, the second connection part 1125 may be formed to overlap the first connection part 1115.

In addition, for example, the second connection part 1125 may have a shape extending outwardly from a lower end of a side surface of the body part 1120.

In a specific example, the second connection part 1125 may be formed to be connected to the side surface of the body part 1120, and may have a shape extending in a direction away from the side surface so as to have a shape surrounding the side surface.

In an optional embodiment, as shown in FIG. 26, the second connection part 1125 may be formed in a shape similar to a rectangular shape to surround the side surface of the body part 1120.

The second connection part 1125 is for coupling with the heating part 1110 or the heat dissipation part 1130 and may have a width, and may have the width in a direction away from the side surface of the body part 1120. Further details regarding the coupling will be described after the heat dissipation part 1130 is described.

The electrode part 1160 may be disposed in the heating part 1110. In addition, the electrode part 1160 may be disposed to overlap the fluid WT of the body part 1120 in the heating part 1110.

The electrode part 1160 may be formed to heat the electrolyzed water IW in the heating part 1110.

The electrode part 1160 may include a plurality of electrodes.

For example, the electrode part 1160 may include a first electrode 1161 and a second electrode 1162.

In a specific example, the first electrode 1161 and the second electrode 1162 may each be formed to be in contact with the electrolyzed water IW. Although not shown in the drawing, current may be applied to the first electrode 1161 and the second electrode 1162 under control of an electrode control part (not shown), and the applied current may be controlled through the electrodecontrol part (not shown).

The electrolyzed water IW may be heated by the current applied to the first electrode 1161 and the second electrode 1162 of the electrode part 1160. The heat of the electrolyzed water IW may be transferred to the fluid WT of the body part 1120, and the fluid WT may be heated.

The first electrode 1161 and the second electrode 1162 may a shape in which the first electrode 1161 and the second electrode 1162 are spaced apart from each other at an interval in an inner space of the heating part 1110.

For example, the first electrode 1161 and the second electrode 1162 may have shapes elongated while being spaced apart from each other at an interval in the inner space of the heating part 1110, and may each have a linear shape. One end portion formed to extend from each of the first electrode 1161 and the second electrode 1162 may be formed to be spaced apart from a region of the heating part 1110, specifically, the inner surface of the heating part 1110.

Further, a conductive part (not shown) connected to one region of each of the first electrode 1161 and the second electrode 1162 may be included so that current is applied to the first electrode 1161 and the second electrode 1162 therethrough. The conductive part (not shown) may be a wire-shaped conductive line and may be connected to the electrode control part (not shown). In an optional embodiment, the conductive part (not shown) may be separately provided on an outside of the heating part 1110, and may be integrally formed with one surface of the heating part 1110 as another example.

In an optional embodiment, the first and second electrodes 1161 and 1162 of the electrode part 1160 may be formed to extend in a transverse or longitudinal direction of the heating part 1110.

In addition, in an optional embodiment, a plurality of electrode parts 1160 may be disposed, and for example in FIG. 25, four electrode parts 1160 are depicted. The plurality of electrode parts 1160 may be disposed to be spaced apart from each other, and in a specific example, the plurality of electrode parts 1160 may be arranged in the longitudinal or transverse direction of the heating part 1110 or in a direction crossing a longitudinal direction of the first electrode 1161 and the second electrode 1162.

The plurality of electrode parts 1160 may be arranged in the transverse or longitudinal direction of the heating part 1110 to improve a heating rate for heating the electrolyzed water IW in the heating part 1110 and to improve uniformity of heating of the electrolyzed water IW in the heating part 1110.

Although not shown in the drawing, in an optional embodiment, the electrode part 1160 may include three electrodes in the form of three phases.

In an optional embodiment, a temperature sensing member (not shown) may be connected to the heating part 1110 to measure the temperature of the electrolyzed water IW inside the heating part 1110. In addition, a cooling part (not shown) may also be disposed to control overheating of the temperature sensing part (not shown).

A control part (not shown) may be formed to control current applied to the electrode part 1160. The current applied to each of the first and second electrodes 1161 and 1162 of the electrode part 1160 may be controlled through the control part (not shown), and in an optional embodiment, the current may be controlled in real time.

For example, the electrode part 1160 may have a form in which an alternating current is applied.

Although not shown in the drawing, the electrode part 1160 may include one electrode in a single direct-current application form, and may include three electrodes in the form of three phases as another example.

The various structures of the electrode part 1160 described above may be selectively applied to the embodiments described below.

At this time, the control part (not shown) may check the amount of current applied to the electrode part 1160 and perform current control by increasing or decreasing the amount of current according to a set value, thereby reducing a rapid temperature change of the electrolyzed water IW.

The control part (not shown) may have various forms to facilitate a change in current. For example, the control part (not shown) may include various types of switches, and may include a non-contact relay such as an SSR for sensitive and rapid control.

The heat dissipation part 1130 may be disposed between the heating part 1110 and the body part 1120.

The heat dissipation part 1130 may be located between the electrolyzed water IW disposed in the heating part 1110 and the fluid WT disposed in the body part 1120. In addition, the heat dissipation part 1130 may be formed to be spaced apart from the electrode part 1160.

In an optional embodiment, the heat dissipation part 1130 may be in contact with the electrolyzed water IW and may have, for example, a shape in which an upper side of the heating part 1110 is open and an upper portion of the open region is covered by the heat dissipation part 1130.

In an optional embodiment, the heat dissipation part 1130 may be in contact with the fluid WT and may also have, for example, a shape in which one side of the body part 1120, specifically, one side facing the heating part 1110 is open and the open region is covered by the heat dissipation part 1130.

The heat dissipation part 1130 may be formed of a material having high thermal conductivity, and may be formed to include, for example, a metal material. Heat of the electrolyzed water IW may be easily transferred to the fluid WT through the heat dissipation part 1130.

In a specific example, the heat dissipation part 1130 may include iron, aluminum, stainless steel, or other alloys.

In addition, in an optional embodiment, the heat dissipation part 1130 may include an insulating coating layer (not shown) on one side facing the electrolyzed water IW, and may also include an insulating coating layer (not shown) on one side facing the fluid WT. This may reduce or prevent current from flowing through the heat dissipation part 1130 from the electrolyzed water IW.

In an optional embodiment, the heat dissipation part 1130 may have a region elongated from a side surface thereof. For example, at least one region of an edge of the heat dissipation part 1130 may be formed to extend so as not to overlap the electrolyzed water IW and the fluid WT.

In addition, the extending region of the heat dissipation part 1130 may be formed to overlap the first connection part 1115 and the second connection part 1125, and may be disposed between the first connection part 1115 and the second connection part 1125.

In a specific example, the heat dissipation part may be formed to surround a region in which the electrolyzed water IW or the fluid WT is disposed.

The first connection part 1115 and the second connection part 1125 may have regions overlapping and coupled to one region of the heat dissipation part 1130 disposed therebetween. For example, the first connection part 1115, the second connection part 1125, and the one region of the heat dissipation part 1130 are coupled to each other to couple the heating part 1110, the body part 1120, and the heat dissipation part 1130.

In an optional embodiment, a coupling member CBM may be disposed to overlap one region of the heat dissipation part 1130, which is disposed between the first connection part 1115 and the second connection part 1125, to couple the one region of the heat dissipation part 1130 to the first connection part 1115 and the second connection part 1125.

For example, the coupling member CBM may have the form of a bolt or a nut. In addition, in another example, the coupling member CBM may include screws, pins, rivets, or other various forms or kinds of members for coupling.

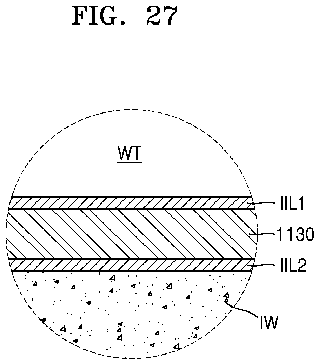

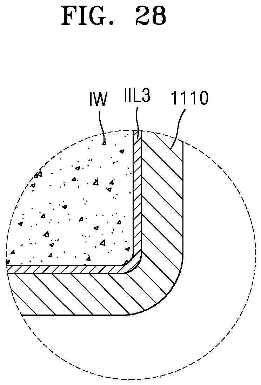

FIG. 27 is an exemplary enlarged view of portion A of FIG. 25, and FIG. 28 is an exemplary enlarged view of portion B of FIG. 25.

In an optional embodiment, referring to FIG. 27, the heat dissipation part 1130 may include a first insulating layer IIL1 on a side surface facing the fluid WT and a second insulating layer IIL2 on a side surface facing the electrolyzed water IW.

In addition, in an optional embodiment, the heat dissipation part 1130 may also include only the second insulating layer IIL2 on at least the side surface facing the electrolyzed water IW.

The first insulating layer IIL1 or the second insulating layer IIL2 may include an inorganic layer, such as a ceramic material or the like.

In another example, the first insulating layer IlL 1 or the second insulating layer IIL2 may include an organic layer such as a resin layer, and may also include an insulating Teflon layer as a specific example.

The second insulating layer IIL2 may reduce current flowing to the heat dissipation part 1130 through the electrolyzed water IW, and may reduce or prevent the flow of the leaked current from remaining in the body part 1120 or the fluid WT. Furthermore, when leakage current components remain in the heat dissipation part 1130, the first insulating layer IIL1 may reduce or prevent the leakage current components from flowing to the fluid WT, thereby reducing the occurrence of an electrical accident that may occur during the flow of the fluid WT.

In an optional embodiment, referring to FIG. 28, the heating part 1110 may include a third insulating layer IIL3 on at least the inner surface facing the electrolyzed water IW.

The third insulating layer IIL3 may include an inorganic layer such as a ceramic material.

In another example, the third insulating layer IIL3 may include an organic layer such as a resin layer, and may also include an insulating Teflon layer as a specific example.

The third insulating layer IIL3 may reduce current flowing to the inner surface or an outer side of the heating part 1110 through the electrolyzed water IW, and may reduce or prevent the flow of current through the heating part 1110 from being transmitted to the body part 1120 or the fluid WT.

The electrode boiler device of the present embodiment may heat electrolyzed water inside the heating part through control of current applied to the electrodes of the electrode part of the heating part. The heat of the electrolyzed water may be transferred to a fluid of the body part to heat the fluid. Here, the heat dissipation part is disposed between the heating part and the body part so that the heat of the electrolyzed water is transferred to the fluid through the heat dissipation part.

With such a configuration, the heat of the electrolyzed water may be effectively transferred to the fluid, which may improve fluid heating efficiency through the electrolyzed water.

In addition, a heating rate for heating the electrolyzed water in the heating part may be improved through the electrodes of the electrode part, which are elongated in the transverse or longitudinal direction of the heating part so as to overlap the electrolyzed water. In an optional embodiment, a plurality of electrode parts may be disposed to be spaced apart from each other in the heating part, and in a specific example, the electrode parts may be disposed in a direction crossing a height direction of the heating part to improve a heating rate for heating the electrolyzed water in the heating part and to improve uniformity of heating of the electrolyzed water in the transverse or longitudinal direction of the heating part.

In addition, since the fluid is disposed to overlap the heated electrolyzed water, the heating of the fluid may be performed rapidly, and the circulation of the heated fluid from the unheated fluid flowing into the body part is smoothly performed, so that the uniformity of heating of the fluid is improved, which may improve the overall efficiency of the electrode boiler device and improve user convenience. For example, hot water may be easily supplied to a user.

In addition, from among side surfaces of the heat dissipation part, the side surface facing the electrolyzed water includes an insulating layer, for example, an inorganic insulating layer such as ceramic, so that the flow of current or the flow of leakage current from the electrolyzed water to the heat dissipation part may be reduced or prevented. In addition, from among the side surfaces of the heat dissipation part, the side surface of the heat dissipation part facing the fluid includes an insulating layer, for example, an inorganic insulating layer such as ceramic, so that leakage current components that may remain in the heat dissipation part may be effectively reduced or prevented from being transmitted to the fluid, thereby increasing se safety of the user even when the fluid is heated and discharged to the outside of the electrode boiler device.

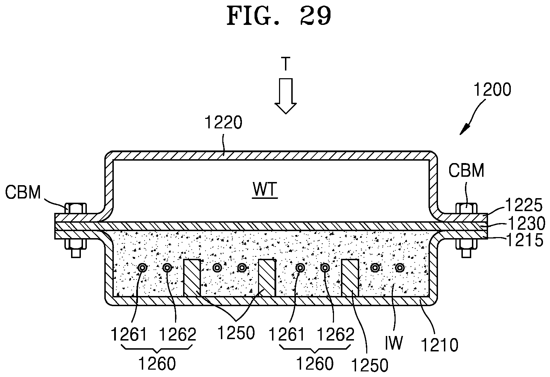

FIG. 29 is a schematic view illustrating an electrode boiler device according to another embodiment of the present disclosure.

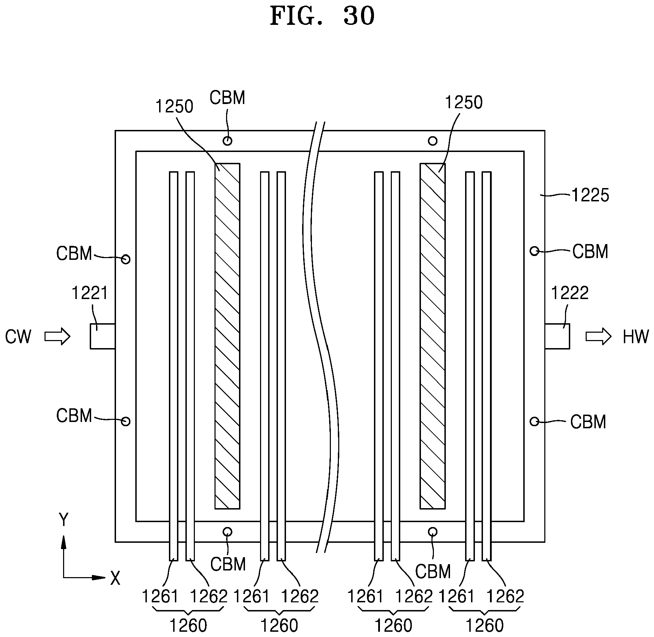

FIG. 30 is a schematic plan view as viewed from direction T of FIG. 29.

Referring to FIGS. 29 and 30, an electrode boiler device 1200 of the present embodiment may include a heating part 1210, a body part 1220, a heat dissipation part 1230, and an electrode part 1260.

For convenience of description, differences from the above-described embodiments will be mainly described.

The heating part 1210 may be formed such that electrolyzed water IW is disposed therein.
In addition, the heating part 1210 may be formed such that a width or length of a region in which the electrolyzed water IW is disposed is greater than a height of the region.

A barrier part 1250 is formed inside the heating part 1210.

The barrier part 1250 may have a shape protruding in a direction toward the body part 1220 from a bottom of the heating part 1210. In this case, the barrier part 1250 may have a height less than a height of the heating part 1210 so as to be spaced apart from the heat dissipation part 1230.

In an optional embodiment, a plurality of barrier parts 1250 may be disposed to be spaced apart from each other.

The barrier part 1250 may have various shapes, for example, the barrier part 1250 may be disposed between the electrode parts 1260 to be spaced apart from the electrode parts 1260 and may have a length.

The barrier part 1250 may have the length in a direction crossing a direction in which the electrode parts 1260 disposed on both sides of the barrier part 1250 are adjacent to each other, and may have the length in the same direction as a longitudinal direction of the electrode part 1260 as an optional embodiment.

In an optional embodiment, the barrier part 1250 may have an edge that is equal to or elongated beyond one end portion of the electrode part 1260, and specifically, may have the length whose value is greater than that of a length of electrode part 1260.

A space for increasing electrical activity between the electrode part 1260 and a side surface of the barrier part 1250 may be formed due to the barrier part 1250, and in an example, an effect of electrical flow to the electrolyzed water IW through the electrode part 1260 may be improved due to the barrier part 1250.

In a specific example, when the electrolyzed water IW is heated by Joule heat under control of current applied through the electrode part 1260, the electrolyzed water IW may be intensively heated in a heating space, thereby improving heating efficiency of heating the electrolyzed water IW.

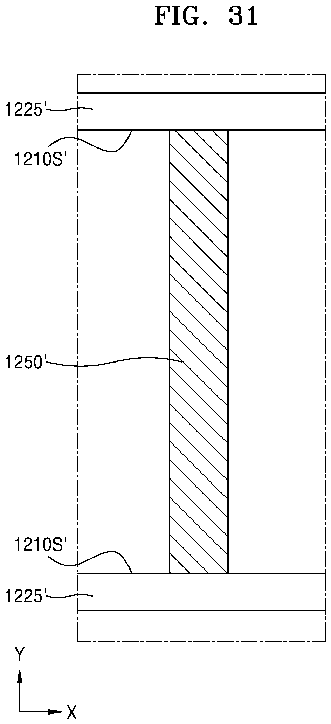

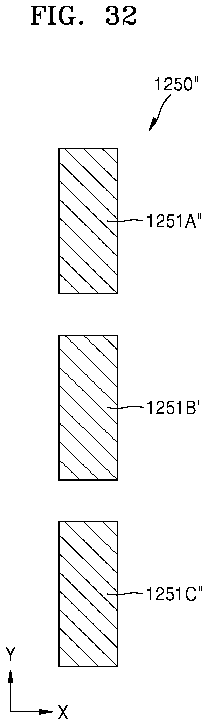

FIGS. 31 and 32 are views illustrating modified examples of FIG. 30.

Referring to FIG. 31, a barrier part 1250' may be elongated so that at least one side edge thereof may be in contact with an inner surface 121 0S' of the heating part, and in an optional embodiment, both side edges of the barrier part 1250' may be in contact with the inner surface 1210S',

Referring to FIG. 32, a plurality of barrier parts 1250" may have a shape in which they are spaced apart from each other in a longitudinal direction. For example, the barrier parts 1250" may include a plurality of spacing members 1251 A", 1251 B", and 1251C" spaced apart from each other in the longitudinal direction. This may improve flow characteristics of the electrolyzed water IW flowing through a space between the plurality of spacing members 1251A", 1251B", and 1251C" to improve heating uniformity.

The electrolyzed water IW may be of various types. For example, the electrolyzed water IW may include an electrolyte solution, specifically distilled water, filtered water, bottled water, tap water, or the like in which at least one of various types of electrolyte solutions is appropriately diluted.

In an optional embodiment, a first connection part 1215 may be formed on one side of the heating part 1210. For example, the first connection part 1215 may have a shape extending outwardly from an upper end of a side surface of the heating part 1210.

The body part 1220 may be formed such that a fluid WT may be disposed therein to overlap the electrolyzed water IW in at least one region. The fluid WT may include various types, for example, a liquid or a gas.

In an optional embodiment, the fluid WT may include water, and for example, the electrode boiler device 1200 may include a method of using hot water.
In addition, the body part 1220 may be formed such that a width or length of a region in which the fluid WT is disposed is greater than a height of the region.

The body part 1220 may have various shapes, and may include at least an inlet 1221 for inflowing the fluid WT and an outlet 1222 for discharging the fluid WT.

In an optional embodiment, a second connection part 1225 may be formed on one side of the body part 1220. In addition, the second connection part 1225 may be formed to overlap the first connection part 1215.

The configuration and the like of the body part 1220 are the same as or similar to those described in the embodiment described above, and thus a detailed description thereof will be omitted.

The electrode part 1260 may be disposed in the heating part 1210. In addition, the electrode part 1260 may be disposed to overlap the fluid WT of the body part 1220 in the heating part 1210.

The electrode part 1260 may be formed to be spaced apart from the barrier part 1250.

In an optional embodiment, the electrode part 1260 may be disposed between the barrier parts 1250 on both sides of the electrode part 1260. This allows heating efficiency for heating the electrolyzed water IW through the electrode part 1260 to be increased in a space between the barrier parts 1250.

Further details of the electrode part 1260 are the same or similar to those described in the above-described embodiments, and thus detailed descriptions thereof will be omitted.

The heat dissipation part 1230 may be disposed between the heating part 1210 and the body part 1220. The heat dissipation part 1230 is the same or similar to that described in the embodiment described above, and thus a detailed description thereof will be omitted.

Although not shown in the drawing, in an optional embodiment, the above-described structure of FIG. 27 or 28 may be selectively applied.

The electrode boiler device of the present embodiment may heat electrolyzed water inside the heating part through control of current applied to the electrodes of the electrode part of the heating part. The heat of the electrolyzed water may be transferred to a fluid of the body part to heat the fluid. Here, the heat dissipation part is disposed between the heating part and the body part so that the heat of the electrolyzed water is transferred to the fluid through the heat dissipation part.

Meanwhile, Joule heat may be effectively transferred to the electrolyzed water in a space between the electrode part and the barrier part due to the barrier part, so that the electrolyzed water may be effectively heated, and the heating rate may be improved.

In addition, the barrier part may be disposed on both sides of the electrode part, so that heating uniformity characteristics for heating the electrolyzed water through the electrode part may be improved.

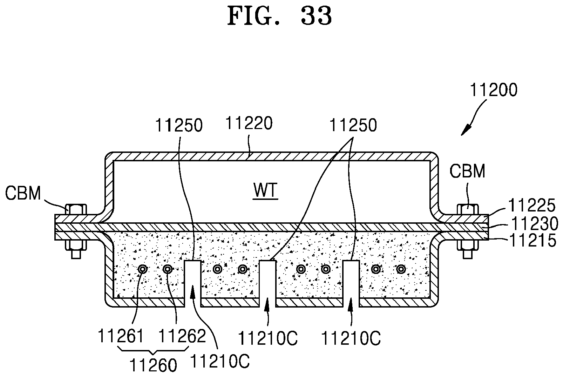

FIG. 33 is a schematic view illustrating an electrode boiler device according to another embodiment of the present disclosure.

Referring to FIG. 33, an electrode boiler device 11200 of the present embodiment may include a heating part, a body part 11220, a heat dissipation part 11230, and an electrode part 11260.

For convenience of description, differences from the above-described embodiments will be mainly described.

A barrier part 11250 is formed inside the heating part.

The barrier part 11250 may have a shape protruding in a direction toward the body part 11220 from a bottom of a heating part 11210, and in a specific example, the barrier part 11250 may have a shape integrated with the bottom of the heating part 11210.

In an optional embodiment, the heating part may include a concave portion 11210C having a shape facing to an inside thereof from the outside, and the barrier part 11250 may be in contact with the electrolyzed water IW to correspond to the concave portion 11210C and may have a shape protruding in a direction toward the heat dissipation part 11230.

With such a structure, the heating part 11210 and the barrier part 11250 may be easily implemented.

The structures of the heating part and the barrier part 11250 of the present embodiment may be selectively applied to the following embodiments.

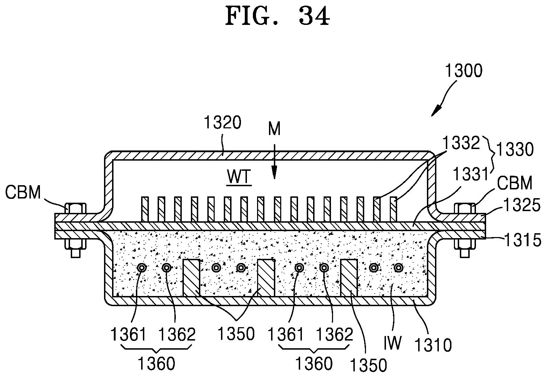

FIG. 34 is a schematic view illustrating an electrode boiler device according to another embodiment of the present disclosure.

Referring to FIG. 34, an electrode boiler device 1300 of the present embodiment may include a heating part 1310, a body part 1320, a heat dissipation part 1330, and an electrode part 1360.

For convenience of description, differences from the above-described embodiments will be mainly described.

The heating part 1310 may be formed such that electrolyzed water IW is disposed therein.
In addition, the heating part 1310 may be formed such that a width or length of a region in which the electrolyzed water IW is disposed is greater than a height of the region.

A barrier part 1350 is formed inside the heating part 1310.

The barrier part 1350 may have a shape protruding in a direction toward the body part 1320 from a bottom of the heating part 1310. In this case, the barrier part 1350 may have a height less than a height of the heating part 1310 so as to be spaced apart from the heat dissipation part 1330.

In an optional embodiment, a plurality of barrier parts 1350 may be disposed to be spaced apart from each other.

The barrier part 1350 may have various shapes, for example, the barrier part 1350 may be disposed between the electrode parts 1360 to be spaced apart from the electrode parts 1360 and may have a length.

Although not shown in the drawing, the structure of FIG. 31 or 32 may be selectively applied.

The electrolyzed water IW may be of various types. For example, the electrolyzed water IW may include an electrolyte solution, specifically distilled water, filtered water, bottled water, tap water, or the like in which at least one of various types of electrolyte solutions is appropriately diluted.

In an optional embodiment, a first connection part 1315 may be formed on one side of the heating part 1310. For example, the first connection part 1315 may have a shape extending outwardly from an upper end of a side surface of the heating part 1310.

The body part 1320 may be formed such that a fluid WT may be disposed therein to overlap the electrolyzed water IW in at least one region. The fluid WT may include various types, for example, a liquid or a gas.

In an optional embodiment, the fluid WT may include water, and for example, the electrode boiler device 1300 may include a method of using hot water.
In addition, the body part 1320 may be formed such that a width or length of a region in which the fluid WT is disposed is greater than a height of the region.

The body part 1320 may have various shapes, and may include at least an inlet 1321 for inflowing the fluid WT and an outlet 1322 for discharging the fluid WT.

In an optional embodiment, a second connection part 1325 may be formed on one side of the body part 1320. In addition, the second connection part 1325 may be formed to overlap the first connection part 1315.

The configuration and the like of the body part 1320 are the same as or similar to those described in the embodiment described above, and thus a detailed description thereof will be omitted.

The electrode part 1360 may be disposed in the heating part 1310. In addition, the electrode part 1360 may be disposed to overlap the fluid WT of the body part 1320 in the heating part 1310.

The electrode part 1360 may be formed to be spaced apart from the barrier part 1350.

In an optional embodiment, the electrode part 1360 may be disposed between the barrier parts 1350 on both sides of the electrode part 1360. This allows heating efficiency for heating the electrolyzed water IW through the electrode part 1360 to be increased in a space between the barrier parts 1350.

Further details of the electrode part 1360 are the same or similar to those described in the above-described embodiments, and thus detailed descriptions thereof will be omitted.

The heat dissipation part 1330 may be disposed between the heating part 1310 and the body part 1320.

The heat dissipation part 1330 may be located between the electrolyzed water IW disposed in the heating part 1310 and the fluid WT disposed in the body part 1320. In addition, the heat dissipation part 1330 may be formed to be spaced apart from the electrode part 1360.

In an optional embodiment, the heat dissipation part 1330 may be in contact with the electrolyzed water IW and may have, for example, a shape in which an upper side of the heating part 1310 is open and an upper portion of the open region is covered by the heat dissipation part 1330.

In an optional embodiment, the heat dissipation part 1330 may be in contact with the fluid WT and may also have, for example, a shape in which one side of the body part 1320, specifically, one side facing the heating part 1310 is open and the open region is covered by the heat dissipation part 1330.

The heat dissipation part 1330 may have various shapes, and may include, for example, a base 1331 and a heat dissipation protrusion 1332.

The base 1331 may have an elongated shape and may have a shape similar to, for example, a plate.

A plurality of heat dissipation protrusions 1332 may be provided, may be connected to the base 1331, and may protrude from the base 1331 toward the fluid WT.

The efficiency of heat transfer from the heat dissipation part 1330 to the fluid WT may be improved through the plurality of heat dissipation protrusions 1332.

In an optional embodiment, the plurality of heat dissipation protrusions 1332 may have a shape extending in one direction and may have regions spaced apart from each other.

The heat dissipation part 1330 may be formed of a material having high thermal conductivity, and may be formed to include, for example, a metal material. Heat of the electrolyzed water IW may be easily transferred to the fluid WT through the heat dissipation part 1330.

In a specific example, the heat dissipation part 1330 may include iron, aluminum, stainless steel, or other alloys.

In addition, in an optional embodiment, the heat dissipation part 1330 may include an insulating coating layer (not shown) on one side facing the electrolyzed water IW, and may also include an insulating coating layer (not shown) on one side facing the fluid WT. This may reduce or prevent current from flowing through the heat dissipation part 1330 from the electrolyzed water IW.

In an optional embodiment, the heat dissipation part 1330 may have a region elongated from a side surface thereof. For example, at least one region of an edge of the heat dissipation part 1330, specifically, at least one region of the base 1331 of the heat dissipation part 1330 may be formed to extend so as not to overlap the electrolyzed water IW and the fluid WT.

In addition, at least one extending region of the base 1331 of the heat dissipation part 1330 may be formed to overlap the first connection part 1315 and the second connection part 1325, and may be disposed between the first connection part 1315 and the second connection part 1325.

In a specific example, at least one extending region of the base 1331 may be formed to surround a region in which the electrolyzed water IW or the fluid WT is disposed.

The first connection part 1315 and the second connection part 1325 may have regions overlapping and coupled to one region of the base 1331 disposed therebetween. For example, the first connection part 1315, the second connection part 1325, and the one region of the base 1331 are coupled to each other to couple the heating part 1310, the body part 1320, and the heat dissipation part 1330.

Although not shown in the drawing, in an optional embodiment, the above-described structure of FIG. 27 or 28 may be selectively applied.

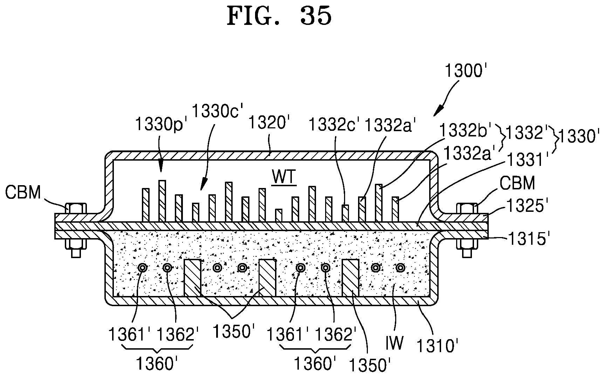

FIG. 35 is a schematic view illustrating an electrode boiler device according to another embodiment of the present disclosure.

Referring to FIG. 35, an electrode boiler device 1300' of the present embodiment may include a heating part 1310', a body part 1320', a heat dissipation part 1330', and an electrode part 1360'.

For convenience of description, differences from the above-described embodiments will be mainly described.

The heat dissipation part 1330' may include a base 1331' and a heat dissipation protrusion 1332'.

The base 1331' may have an elongated shape and may have a shape similar to, for example, a plate.

A plurality of heat dissipation protrusions 1332' may be provided, may be connected to the base 1331', and may protrude from the base 1331' toward a fluid WT.

The heat dissipation protrusions 1332' may include at least a first protruding member 1332a' and a second protruding member 1332b' having a height greater than that of the first protruding member 1332a'. In addition, the heat dissipation protrusions 1332' may include a third protruding member 1332c' having a height less than that of the first protruding member 1332a'. This may be implemented by controlling the length of each of these different protruding members differently.

In an optional embodiment, the first protruding member 1332a' and the second protruding member 1332b' may be adjacent to each other, and the first protruding member 1332a' and the third protruding member 1332c' may be adjacent to each other.

In an optional embodiment, a plurality of first protruding members 1332a', a plurality of second protruding members 1332b', and a plurality of third protruding members 1332c' may be disposed so that a convex region 1330p' and a concave region 1330c' may be formed. For example, the convex region 1330p' may be a region protruding in a direction toward the fluid WT, and the concave region 1330c' may be adjacent to the convex region 1330p' and have a valley shape concave in a direction toward the base 1331.

In addition, in an optional embodiment, the convex region 1330p' and the concave region 1330c' may be alternately disposed.

Through the structure of the convex region 1330p' and the concave region 1330c', heat transfer characteristics for transferring heat to the fluid WT in contact therewith may be improved. In addition, since the fluid WT flows smoothly through the convex region 1330p' and the concave region 1330c', the circulation characteristics of the fluid WT in the body part 1320' are improved, thereby improving a heating rate for heating the fluid WT in the body part 1320'.

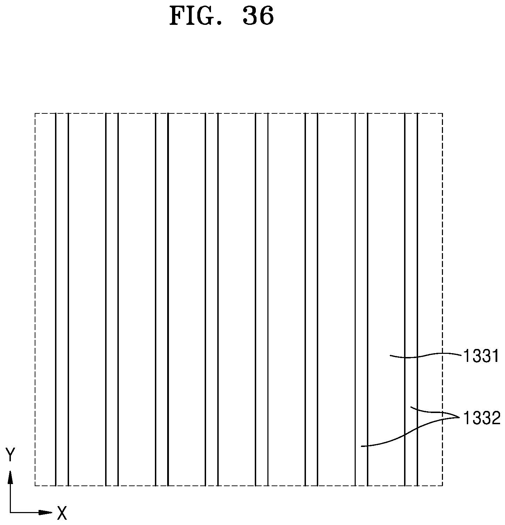

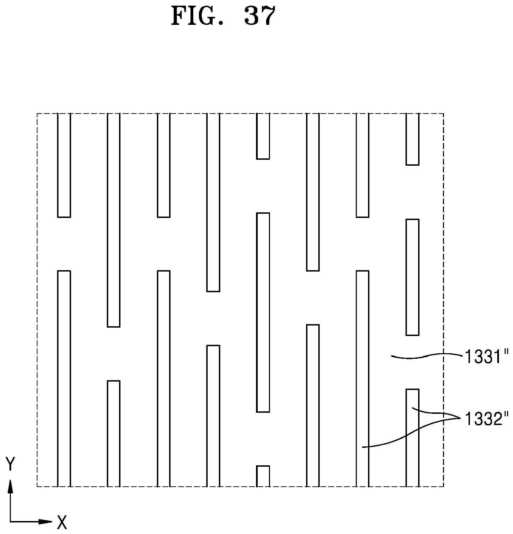

FIGS. 36 and 37 are exemplary views as viewed from direction M of FIG. 34.

Referring to FIG. 36, the heat dissipation protrusion 1332 may be formed on one surface of the base 1331 of the heat dissipation part 1330, and the heat dissipation protrusion 1332 may have a shape elongated in one direction. For example, each of the heat dissipation protrusions 1332 may be formed on one surface of the base 1331 and may be formed in the body part 1320 to face one side surface of the body part 1320 and a side surface facing the one side surface.

In addition, the heat dissipation protrusions 1332 may have shapes spaced apart from each other.

In an optional embodiment, the heat dissipation protrusion 1332 may have a width less than a height.

In another example, referring to FIG. 37, a heat dissipation protrusion 1332" may be formed on one surface of a base 1331" of a heat dissipation part 1330", and the heat dissipation protrusion 1332" may have a shape elongated in one direction. In addition, a plurality of heat dissipation protrusions 1332" spaced apart from each other in a longitudinal direction may be included. This allows a path through which the fluid WT flows to be varied or elongated, thereby improving heating characteristics for the fluid WT.

The plurality of heat dissipation protrusions 1332" adjacent to each other in a direction crossing the longitudinal direction, for example, in a transverse direction, may be disposed not in parallel with each other.

In an optional embodiment, the plurality of heat dissipation protrusions 1332" adjacent to each other in the direction crossing the longitudinal direction, for example, in the transverse direction, may be disposed side by side with each other.

The electrode boiler device of the present embodiment may heat electrolyzed water inside the heating part through control of current applied to the electrodes of the electrode part of the heating part. The heat of the electrolyzed water may be transferred to a fluid of the body part to heat the fluid. Here, the heat dissipation part is disposed between the heating part and the body part so that the heat of the electrolyzed water is transferred to the fluid through the heat dissipation part.

Meanwhile, Joule heat may be effectively transferred to the electrolyzed water in a space between the electrode part and the barrier part due to the barrier part, so that the electrolyzed water may be effectively heated, and the heating rate may be improved.

In addition, the barrier part may be disposed on both sides of the electrode part, so that heating uniformity characteristics for heating the electrolyzed water through the electrode part may be improved.

In addition, the heat dissipation part includes a base and a plurality of heat dissipation protrusions to increase a flow path of the fluid on the heat dissipation part, thereby improving heating characteristics for the fluid.

For example, the heat dissipation protrusion may have a shape elongated in a longitudinal direction, for example, may have a shape elongated to face one region of an inner surface of the body part and a side surface facing the one region. This may improve heating uniformity for the fluid of the body part.

In an optional embodiment, the heat dissipation part includes the plurality of heat dissipation protrusions having different heights and thus may have a convex region and a concave region that are convex and concave in a direction toward the fluid. Such a shape of the heat dissipation part enables the fluid in the inner space of the body part to effectively form a flow and an unheated fluid to be heated and convected, thereby improving a heating rate.

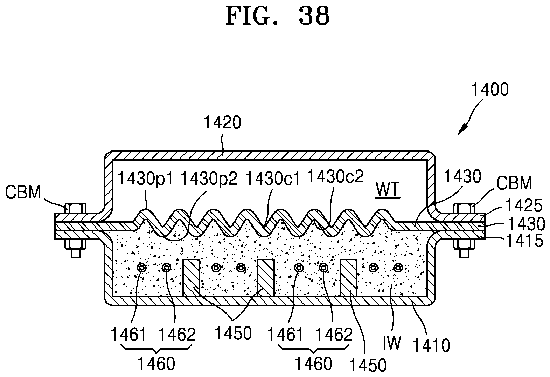

FIG. 38 is a schematic view illustrating an electrode boiler device according to another embodiment of the present disclosure.

Referring to FIG. 38, an electrode boiler device 1400 of the present embodiment may include a heating part 1410, a body part 1420, a heat dissipation part 1430, and an electrode part 1460.

For convenience of description, differences from the above-described embodiments will be mainly described.

The heating part 1410 may be formed such that electrolyzed water IW is disposed therein.
In addition, the heating part 1410 may be formed such that a width or length of a region in which the electrolyzed water IW is disposed is greater than a height of the region.

A barrier part 1450 is formed inside the heating part 1410.

The barrier part 1450 may have a shape protruding in a direction toward the body part 1420 from a bottom of the heating part 1410. In this case, the barrier part 1450 may have a height less than a height of the heating part 1410 so as to be spaced apart from the heat dissipation part 1430.

In an optional embodiment, a plurality of barrier parts 1450 may be disposed to be spaced apart from each other.

The barrier part 1450 may have various shapes, for example, the barrier part 1450 may be disposed between the electrode parts 1460 to be spaced apart from the electrode parts 1460 and may have a length.

Although not shown in the drawing, the structure of FIG. 31 or 32 may be selectively applied.

The electrolyzed water IW may be of various types. For example, the electrolyzed water IW may include an electrolyte solution, specifically distilled water, filtered water, bottled water, tap water, or the like in which at least one of various types of electrolyte solutions is appropriately diluted.

In an optional embodiment, a first connection part 1415 may be formed on one side of the heating part 1410. For example, the first connection part 1415 may have a shape extending outwardly from an upper end of a side surface of the heating part 1410.

The body part 1420 may be formed such that a fluid WT may be disposed therein to overlap the electrolyzed water IW in at least one region. The fluid WT may include various types, for example, a liquid or a gas.

In an optional embodiment, the fluid WT may include water, and for example, the electrode boiler device 1400 may include a method of using hot water.
In addition, the body part 1420 may be formed such that a width or length of a region in which the fluid WT is disposed is greater than a height of the region.

The body part 1420 may have various shapes, and may include at least an inlet 1421 for inflowing the fluid WT and an outlet 1422 for discharging the fluid WT.

In an optional embodiment, a second connection part 1425 may be formed on one side of the body part 1420. In addition, the second connection part 1425 may be formed to overlap the first connection part 1415.

The configuration and the like of the body part 1420 are the same as or similar to those described in the embodiment described above, and thus a detailed description thereof will be omitted.

The electrode part 1460 may be disposed in the heating part 1410. In addition, the electrode part 1460 may be disposed to overlap the fluid WT of the body part 1420 in the heating part 1410.

The electrode part 1460 may be formed to be spaced apart from the barrier part 1450.

In an optional embodiment, the electrode part 1460 may be disposed between the barrier parts 1450 on both sides of the electrode part 1460. This allows heating efficiency for heating the electrolyzed water IW through the electrode part 1460 to be increased in a space between the barrier parts 1450.

Further details of the electrode part 1460 are the same or similar to those described in the above-described embodiments, and thus detailed descriptions thereof will be omitted.

The heat dissipation part 1430 may be disposed between the heating part 1410 and the body part 1420.

The heat dissipation part 1430 may be located between the electrolyzed water IW disposed in the heating part 1410 and the fluid WT disposed in the body part 1420. In addition, the heat dissipation part 1430 may be formed to be spaced apart from the electrode part 1460.

In an optional embodiment, the heat dissipation part 1430 may be in contact with the electrolyzed water IW and may have, for example, a shape in which an upper side of the heating part 1410 is open and an upper portion of the open region is covered by the heat dissipation part 1430.

In an optional embodiment, the heat dissipation part 1430 may be in contact with the fluid WT and may also have, for example, a shape in which one side of the body part 1420, specifically, one side facing the heating part 1410 is open and the open region is covered by the heat dissipation part 1430.

The heat dissipation part 1430 may have various shapes, for example, a curved shape. In a specific example, the heat dissipation part 1430 may include a first convex region 1430p1 and a first concave region 1430c1 that are convex and concave in a direction toward the fluid WT. This may increase a contact area between the fluid WT and the heat dissipation part 1430, and allow a smooth flow of the fluid WT to be formed on an upper portion of the heat dissipation part 1430.

In addition, the heat dissipation part 1430 may include a second convex region 1430p2 and a second concave region 1430c2 that are convex and concave in a direction toward the electrolyzed water IW. For example, the second convex region 1430p2 may be formed at a position corresponding to the first concave region 1430c1 , and the second concave region 1430c2 may be formed at a position corresponding to the first convex region 1430p1. Accordingly, a contact area between the electrolyzed water IW and the heat dissipation part 1430 may be increased, and heat may be effectively transferred from the electrolyzed water IW to the heat dissipation part 1430.

In an optional embodiment, one or more first convex regions 1430p1 and one or more first concave regions 1430c1 may be sequentially arranged. In addition, the first convex region 1430p1 and the one or more first concave regions 1430c1 may have a shape elongated in one direction, for example, may extend toward one inner side surface of the body part 1420 and a region of an inner side surface opposite to the one inner side surface.

In addition, in an optional embodiment, one or more second convex regions 1430p2 and one or more second concave regions 1430c2 may be sequentially arranged.

The heat dissipation part 1430 may be formed of a material having high thermal conductivity, and may be formed to include, for example, a metal material. Heat of the electrolyzed water IW may be easily transferred to the fluid WT through the heat dissipation part 1430.

In a specific example, the heat dissipation part 1430 may include iron, aluminum, stainless steel, or other alloys.

In addition, in an optional embodiment, the heat dissipation part 1430 may include an insulating coating layer (not shown) on one side facing the electrolyzed water IW, and may also include an insulating coating layer (not shown) on one side facing the fluid WT. This may reduce or prevent current from flowing through the heat dissipation part 1430 from the electrolyzed water IW.

In an optional embodiment, the heat dissipation part 1430 may have a region elongated from a side surface thereof. For example, at least one region of an edge of the heat dissipation part 1430, specifically, at least one region of the heat dissipation part 1430 may be formed to extend so as not to overlap the electrolyzed water IW and the fluid WT.

In addition, at least one extending region of the heat dissipation part 1430 may be formed to overlap the first connection part 1415 and the second connection part 1425, and may be disposed between the first connection part 1415 and the second connection part 1425.

In a specific example, at least one extending region of the heat dissipation part 1430 may be formed to surround a region in which the electrolyzed water IW or the fluid WT is disposed.

The first connection part 1415 and the second connection part 1425 may have regions overlapping and coupled to one region of the heat dissipation part 1430 disposed therebetween. For example, the first connection part 1415, the second connection part 1425, and the one region of the heat dissipation part 1430 are coupled to each other to couple the heating part 1410, the body part 1420, and the heat dissipation part 1430.

In an optional embodiment, a coupling member CBM may be disposed to overlap one region of the heat dissipation part 1430, which is disposed between the first connection part 1415 and the second connection part 1425, to couple the one region of the heat dissipation part 1430 to the first connection part 1415 and the second connection part 1425.

Although not shown in the drawing, in an optional embodiment, the above-described structure of FIG. 27 or 28 may be selectively applied.

The electrode boiler device of the present embodiment may heat electrolyzed water inside the heating part through control of current applied to the electrodes of the electrode part of the heating part. The heat of the electrolyzed water may be transferred to a fluid of the body part to heat the fluid. Here, the heat dissipation part is disposed between the heating part and the body part so that the heat of the electrolyzed water is transferred to the fluid through the heat dissipation part.

Meanwhile, Joule heat may be effectively transferred to the electrolyzed water in a space between the electrode part and the barrier part due to the barrier part, so that the electrolyzed water may be effectively heated, and the heating rate may be improved.

In addition, the barrier part may be disposed on both sides of the electrode part, so that heating uniformity characteristics for heating the electrolyzed water through the electrode part may be improved.

In addition, the heat dissipation part includes one or more first convex regions and one or more first concave regions formed to face the fluid, and thus may improve the efficiency of heat transfer from the heat dissipation part to the fluid and improve a smooth circulation of the fluid through the flow of the fluid.

In addition, the heat dissipation part includes one or more second convex regions and one or more second concave regions formed to face the electrolyzed water, so that heat transfer from the electrolyzed water to the heat dissipation part may be smoothly performed.

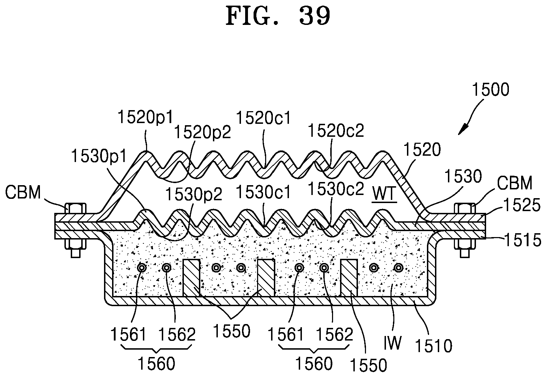

FIG. 39 is a schematic view illustrating an electrode boiler device according to another embodiment of the present disclosure.

Referring to FIG. 39, an electrode boiler device 1500 of the present embodiment may include a heating part 1510, a body part 1520, a heat dissipation part 1530, and an electrode part 1560.

For convenience of description, differences from the above-described embodiments will be mainly described.

The heating part 1510 may be formed such that electrolyzed water IW is disposed therein.
In addition, the heating part 1510 may be formed such that a width or length of a region in which the electrolyzed water IW is disposed is greater than a height of the region.

A barrier part 1550 is formed inside the heating part 1510.

The barrier part 1550 may have a shape protruding in a direction toward the body part 1520 from a bottom of the heating part 1510. In this case, the barrier part 1550 may have a height less than a height of the heating part 1510 so as to be spaced apart from the heat dissipation part 1530.

In an optional embodiment, a plurality of barrier parts 1550 may be disposed to be spaced apart from each other.

The barrier part 1550 may have various shapes, for example, the barrier part 1550 may be disposed between the electrode parts 1560 to be spaced apart from the electrode parts 1560 and may have a length.

Although not shown in the drawing, the structure of FIG. 31 or 32 may be selectively applied.

The electrolyzed water IW may be of various types. For example, the electrolyzed water IW may include an electrolyte solution, specifically distilled water, filtered water, bottled water, tap water, or the like in which at least one of various types of electrolyte solutions is appropriately diluted.

In an optional embodiment, a first connection part 1515 may be formed on one side of the heating part 1510. For example, the first connection part 1515 may have a shape extending outwardly from an upper end of a side surface of the heating part 1510.

The body part 1520 may be formed such that a fluid WT may be disposed therein to overlap the electrolyzed water IW in at least one region. The fluid WT may include various types, for example, a liquid or a gas.

In an optional embodiment, the fluid WT may include water, and for example, the electrode boiler device 1500 may include a method of using hot water.
In addition, the body part 1520 may be formed such that a width or length of a region in which the fluid WT is disposed is greater than a height of the region.

The body part 1520 may have various shapes, and may include at least an inlet 1521 for inflowing the fluid WT and an outlet 1522 for discharging the fluid WT.

In an optional embodiment, a second connection part 1525 may be formed on one side of the body part 1520. In addition, the second connection part 1525 may be formed to overlap the first connection part 1515.

The body part 1520 may have various shapes, for example, a curved shape. In a specific example, the body part 1520 may include a first convex region 1520p1 and a first concave region 1520c1 that are convex and concave in a direction toward the outside.

In addition, the body part 1520 may include a second convex region 1520p2 and a second concave region 1520c2 that are convex and concave in a direction toward the fluid WT. For example, the second convex region 1520p2 may be formed at a position corresponding to the first concave region 1520c1, and the second concave region 1520c2 may be formed at a position corresponding to the first convex region 1520p1.

In an optional embodiment, one or more first convex regions 1520p1 and one or more first concave regions 1520c1 may be sequentially arranged. In addition, the first convex region 1520p1 and the one or more first concave regions 1520c1 may have a shape elongated in one direction.

In addition, in an optional embodiment, one or more second convex regions 1520p2 and one or more second concave regions 1520c2 may be sequentially arranged.

A portion bent in a direction toward the fluid WT is formed on an inner side of the body part 1520 so that the fluid WT smoothly moves, thereby improving thermal efficiency.

In an optional embodiment, the bent shape of the body part 1520 may correspond to a bent shape of the heat dissipation part 1530. For example, the first convex region 1520p1 and the first concave regions 1520c1 of the body part 1520 may be formed to correspond to a first convex region 1530p1 and one or more first concave regions 1530c1 of the heat dissipation part 1530.

This allows the fluid to move smoothly between the heat dissipation part 1530 and the body part 1520, and improves the uniformity of heat transfer through the electrolyzed water IW.

The electrode part 1560 may be disposed in the heating part 1510. In addition, the electrode part 1560 may be disposed to overlap the fluid WT of the body part 1520 in the heating part 1510.

The electrode part 1560 may be formed to be spaced apart from the barrier part 1550.

In an optional embodiment, the electrode part 1560 may be disposed between the barrier parts 1550 on both sides of the electrode part 1560. This allows heating efficiency for heating the electrolyzed water IW through the electrode part 1560 to be increased in a space between the barrier parts 1550.

Further details of the electrode part 1560 are the same or similar to those described in the above-described embodiments, and thus detailed descriptions thereof will be omitted.

The heat dissipation part 1530 may be disposed between the heating part 1510 and the body part 1520.

The heat dissipation part 1530 may be located between the electrolyzed water IW disposed in the heating part 1510 and the fluid WT disposed in the body part 1520. In addition, the heat dissipation part 1530 may be formed to be spaced apart from the electrode part 1560.

In an optional embodiment, the heat dissipation part 1530 may be in contact with the electrolyzed water IW and may have, for example, a shape in which an upper side of the heating part 1510 is open and an upper portion of the open region is covered by the heat dissipation part 1530.

In an optional embodiment, the heat dissipation part 1530 may be in contact with the fluid WT and may also have, for example, a shape in which one side of the body part 1520, specifically, one side facing the heating part 1510 is open and the open region is covered by the heat dissipation part 1530.

The heat dissipation part 1530 may have various shapes, for example, a curved shape. In a specific example, the heat dissipation part 1530 may include a first convex region 1530p1 and the first concave region 1530c1 that are convex and concave in a direction toward the fluid WT. This may increase a contact area between the fluid WT and the heat dissipation part 1530, and allow a smooth flow of the fluid WT to be formed on an upper portion of the heat dissipation part 1530.

In addition, the heat dissipation part 1530 may include a second convex region 1530p2 and a second concave region 1530c2 that are convex and concave in a direction toward the electrolyzed water IW. For example, the second convex region 1530p2 may be formed at a position corresponding to the first concave region 1530c1 , and the second concave region 1530c2 may be formed at a position corresponding to the first convex region 1530p1. This may increase a contact area between the electrolyzed water IW and the heat dissipation part 1530, and allow heat to be effectively transferred from the electrolyzed water IWto the heat dissipation part 1530.

In an optional embodiment, one or more first convex regions 1530p1 and one or more first concave regions 1530c1 may be sequentially arranged. In addition, the first convex region 1530p1 and the one or more first concave regions 1530c1 may have a shape elongated in one direction, for example, may extend toward one inner side surface of the body part 1520 and a region of an inner side surface opposite to the one inner side surface.

In addition, in an optional embodiment, one or more second convex regions 1530p2 and one or more second concave regions 1530c2 may be sequentially arranged.

The heat dissipation part 1530 may be formed of a material having high thermal conductivity, and may be formed to include, for example, a metal material. Heat of the electrolyzed water IW may be easily transferred to the fluid WT through the heat dissipation part 1530.

In a specific example, the heat dissipation part 1530 may include iron, aluminum, stainless steel, or other alloys.

In addition, in an optional embodiment, the heat dissipation part 1530 may include an insulating coating layer (not shown) on one side facing the electrolyzed water IW, and may also include an insulating coating layer (not shown) on one side facing the fluid WT. This may reduce or prevent current from flowing through the heat dissipation part 1530 from the electrolyzed water IW.

In an optional embodiment, the heat dissipation part 1530 may have a region elongated from a side surface thereof. For example, at least one region of an edge of the heat dissipation part 1530, specifically, at least one region of the heat dissipation part 1530 may be formed to extend so as not to overlap the electrolyzed water IW and the fluid WT.

In addition, at least one extending region of the heat dissipation part 1530 may be formed to overlap the first connection part 1515 and the second connection part 1525, and may be disposed between the first connection part 1515 and the second connection part 1525.

In a specific example, at least one extending region of the heat dissipation part 1530 may be formed to surround a region in which the electrolyzed water IW or the fluid WT is disposed.

The first connection part 1515 and the second connection part 1525 may have regions overlapping and coupled to one region of the heat dissipation part 1530 disposed therebetween. For example, the first connection part 1515, the second connection part 1525, and the one region of the heat dissipation part 1530 are coupled to each other to couple the heating part 1510, the body part 1520, and the heat dissipation part 1530.

In an optional embodiment, a coupling member CBM may be disposed to overlap one region of the heat dissipation part 1530, which is disposed between the first connection part 1515 and the second connection part 1525, to couple the one region of the heat dissipation part 1530 to the first connection part 1515 and the second connection part 1525.

Although not shown in the drawing, in an optional embodiment, the above-described structure of FIG. 27 or 28 may be selectively applied.

The electrode boiler device of the present embodiment may heat electrolyzed water inside the heating part through control of current applied to the electrodes of the electrode part of the heating part. The heat of the electrolyzed water may be transferred to a fluid of the body part to heat the fluid. Here, the heat dissipation part is disposed between the heating part and the body part so that the heat of the electrolyzed water is transferred to the fluid through the heat dissipation part.

Meanwhile, Joule heat may be effectively transferred to the electrolyzed water in a space between the electrode part and the barrier part due to the barrier part, so that the electrolyzed water may be effectively heated, and the heating rate may be improved.

In addition, the barrier part may be disposed on both sides of the electrode part, so that heating uniformity characteristics for heating the electrolyzed water through the electrode part may be improved.

In addition, the heat dissipation part includes one or more first convex regions and one or more first concave regions formed to face the fluid, and thus may improve the efficiency of heat transfer from the heat dissipation part to the fluid and improve a smooth circulation of the fluid through the flow of the fluid.

In addition, the heat dissipation part includes one or more second convex regions and one or more second concave regions formed to face the electrolyzed water, so that heat transfer from the electrolyzed water to the heat dissipation part may be smoothly performed.

In addition, the body part may have a bent shape, and in an optional embodiment, the body part may be formed to correspond to the heat dissipation part. With such a structure, fluid heating efficiency may be improved using the smooth flow of the fluid, and fluid heating uniformity through the electrolyzed water may be improved.

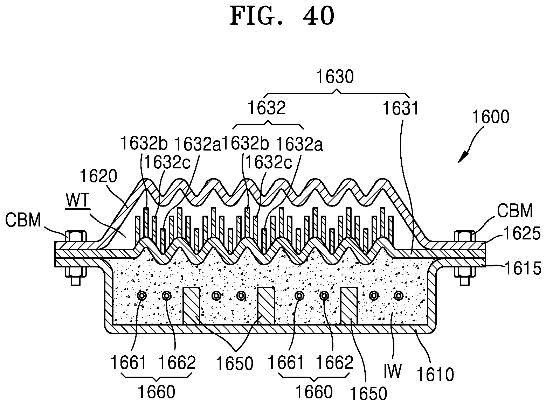

FIG. 40 is a schematic view illustrating an electrode boiler device according to another embodiment of the present disclosure.

Referring to FIG. 40, an electrode boiler device 1600 of the present embodiment may include a heating part 1610, a body part 1620, a heat dissipation part 1630, and an electrode part 1660.

For convenience of description, differences from the above-described embodiments will be mainly described.

The heating part 1610 may be formed such that electrolyzed water IW is disposed therein.
In addition, the heating part 1610 may be formed such that a width or length of a region in which the electrolyzed water IW is disposed is greater than a height of the region.

A barrier part 1650 is formed inside the heating part 1610.

The barrier part 1650 may have a shape protruding in a direction toward the body part 1620 from a bottom of the heating part 1610. In this case, the barrier part 1650 may have a height less than a height of the heating part 1610 so as to be spaced apart from the heat dissipation part 1630.

In an optional embodiment, a plurality of barrier parts 1650 may be disposed to be spaced apart from each other.

The barrier part 1650 may have various shapes, for example, the barrier part 1650 may be disposed between the electrode parts 1660 to be spaced apart from the electrode parts 1660 and may have a length.

Although not shown in the drawing, the structure of FIG. 31 or 32 may be selectively applied.

The electrolyzed water IW may be of various types. For example, the electrolyzed water IW may include an electrolyte solution, specifically distilled water, filtered water, bottled water, tap water, or the like in which at least one of various types of electrolyte solutions is appropriately diluted.

In an optional embodiment, a first connection part 1615 may be formed on one side of the heating part 1610. For example, the first connection part 1615 may have a shape extending outwardly from an upper end of a side surface of the heating part 1610.

The body part 1620 may be formed such that a fluid WT may be disposed therein to overlap the electrolyzed water IW in at least one region. The fluid WT may include various types, for example, a liquid or a gas.

In an optional embodiment, the fluid WT may include water, and for example, the electrode boiler device 1600 may include a method of using hot water.
In addition, the body part 1620 may be formed such that a width or length of a region in which the fluid WT is disposed is greater than a height of the region.

The body part 1620 may have various shapes, and may include at least an inlet 1621 for inflowing the fluid WT and an outlet 1622 for discharging the fluid WT.

In an optional embodiment, a second connection part 1625 may be formed on one side of the body part 1620. In addition, the second connection part 1625 may be formed to overlap the first connection part 1615.

The body part 1620 may have various shapes, for example, a curved shape. In a specific example, the body part 1620 may include a first convex region and a first concave region that are convex and concave in a direction toward the outside.

In addition, the body part 1620 may include a second convex region and a second concave region that are convex and concave in a direction toward the fluid WT. For example, the second convex region may be formed at a position corresponding to the first concave region, and the second concave region may be formed at a position corresponding to the first convex region. In an optional embodiment, one or more first convex regions and one or more first concave regions may be sequentially arranged. In addition, the first convex region and the one or more first concave regions may have a shape elongated in one direction. In addition, in an optional embodiment, one or more second convex regions and one or more second concave regions may be sequentially arranged.

A portion bent in a direction toward the fluid WT is formed on an inner side of the body part 1620 so that the fluid WT smoothly moves, thereby improving thermal efficiency.

In an optional embodiment, the bent shape of the body part 1620 may correspond to a bent shape of the heat dissipation part 1630. For example, the first convex region and the first concave regions of the body part 1620 may be formed to correspond to a first convex region 1630p1 and one or more first concave regions 1630c1 of the heat dissipation part 1630.

This allows the fluid to move smoothly between the heat dissipation part 1630 and the body part 1620, and improves the uniformity of heat transfer through the electrolyzed water IW.

The electrode part 1660 may be disposed in the heating part 1610. In addition, the electrode part 1660 may be disposed to overlap the fluid WT of the body part 1620 in the heating part 1610.

The electrode part 1660 may be formed to be spaced apart from the barrier part 1650.

In an optional embodiment, the electrode part 1660 may be disposed between the barrier parts 1650 on both sides of the electrode part 1660. This allows heating efficiency for heating the electrolyzed water IW through the electrode part 1660 to be increased in a space between the barrier parts 1650.

Further details of the electrode part 1660 are the same or similar to those described in the above-described embodiments, and thus detailed descriptions thereof will be omitted.

The heat dissipation part 1630 may be located between the electrolyzed water IW disposed in the heating part 1610 and the fluid WT disposed in the body part 1620. In addition, the heat dissipation part 1630 may be formed to be spaced apart from the electrode part 1660.

In an optional embodiment, the heat dissipation part 1630 may be in contact with the electrolyzed water IW and may have, for example, a shape in which an upper side of the heating part 1610 is open and an upper portion of the open region is covered by the heat dissipation part 1630.

In an optional embodiment, the heat dissipation part 1630 may be in contact with the fluid WT and may also have, for example, a shape in which one side of the body part 1620, specifically, one side facing the heating part 1610 is open and the open region is covered by the heat dissipation part 1630.

The heat dissipation part 1630 may have various shapes, for example, a curved shape. In a specific example, the heat dissipation part 1630 may include a convex region and a concave region that are convex and concave in a direction toward the fluid WT.

In a specific example, the heat dissipation part 1630 may include a base 1631 and a heat dissipation protrusion 1632.

The base 1631 may have a shape extending such that at least one region is out of the electrolyzed water IW and the fluid WT.

In addition, the base 1631 may have a curved shape. For example, the base 1631 may have a curved shape so as to have convex and concave regions that are convex and concave in a direction toward the fluid WT, which may increase a contact area with the fluid WT and form a smooth flow of the fluid WT on the upper portion of the heat dissipation part 1630. In addition, the base 1631 is formed to include a convex region and a concave region that are convex and concave in a direction toward the electrolyzed water IW, so that a contact area between the electrolyzed water IW and the heat dissipation part 1630 may be increased, and heat may be effectively transferred from the electrolyzed water IW to the heat dissipation part 1630.

A plurality of heat dissipation protrusions 1632 may be provided, may be connected to the base 1631, and may protrude from the base 1631 toward the fluid WT.

The efficiency of heat transfer from the heat dissipation part 1630 to the fluid WT may be improved through the plurality of heat dissipation protrusions 1632.

In an optional embodiment, the plurality of heat dissipation protrusions 1632 may have a shape extending in one direction and may have regions spaced apart from each other.

The heat dissipation protrusions 1632 may include a first protruding member 1632a, a second protruding member 1632b, or a third protruding member 1632c as a plurality of protruding members having different heights with respect to a position of the electrode part 1660.

For example, the second protruding member 1632b may have a height greater than that of the first protruding member 1632a, and the third protruding member 1632c may have a height having a value that is between the height of the first protruding member 1632a and the height of the second protruding member 1632b. Due to these different heights, a plurality of convex or concave regions facing the fluid WT inside the body part 1620 may be formed, and a heating rate for heating the fluid WT in the body part 1620 may be improved by smoothing the flow of the fluid WT and improving circulation characteristics of the fluid WT in the body part 1620.

In an optional embodiment, the first protruding member 1632a, the second protruding member 1632b, or the third protruding member 1632c may have a length in a direction in which the first protruding member 1632a, the second protruding member 1632b, or the third protruding member 1632c protrudes from the base 1631 of the heat dissipation part 1630, and may each have the same length.

The heat dissipation part 1630 may be formed of a material having high thermal conductivity, and may be formed to include, for example, a metal material. Heat of the electrolyzed water IW may be easily transferred to the fluid WT through the heat dissipation part 1630.

In a specific example, the heat dissipation part 1630 may include iron, aluminum, stainless steel, or other alloys.

In addition, in an optional embodiment, the heat dissipation part 1630 may include an insulating coating layer (not shown) on one side facing the electrolyzed water IW, and may also include an insulating coating layer (not shown) on one side facing the fluid WT. This may reduce or prevent current from flowing through the heat dissipation part 1630 from the electrolyzed water IW.

In an optional embodiment, the heat dissipation part 1630 may have a region elongated from a side surface thereof. For example, at least one region of an edge of the heat dissipation part 1630, specifically, at least one region of the heat dissipation part 1630 may be formed to extend so as not to overlap the electrolyzed water IW and the fluid WT.

In addition, at least one extending region of the heat dissipation part 1630 may be formed to overlap the first connection part 1615 and the second connection part 1625, and may be disposed between the first connection part 1615 and the second connection part 1625.

In a specific example, at least one extending region of the heat dissipation part 1630 may be formed to surround a region in which the electrolyzed water IW or the fluid WT is disposed.

The first connection part 1615 and the second connection part 1625 may have regions overlapping and coupled to one region of the heat dissipation part 1630 disposed therebetween. For example, the first connection part 1615, the second connection part 1625, and the one region of the heat dissipation part 1630 are coupled to each other to couple the heating part 1610, the body part 1620, and the heat dissipation part 1630.

In an optional embodiment, a coupling member CBM may be disposed to overlap one region of the heat dissipation part 1630, which is disposed between the first connection part 1615 and the second connection part 1625, to couple the one region of the heat dissipation part 1630 to the first connection part 1615 and the second connection part 1625.

Although not shown in the drawing, in an optional embodiment, the above-described structure of FIG. 27 or 28 may be selectively applied.

The electrode boiler device of the present embodiment may heat electrolyzed water inside the heating part through control of current applied to the electrodes of the electrode part of the heating part. The heat of the electrolyzed water may be transferred to a fluid of the body part to heat the fluid. Here, the heat dissipation part is disposed between the heating part and the body part so that the heat of the electrolyzed water is transferred to the fluid through the heat dissipation part.

Meanwhile, Joule heat may be effectively transferred to the electrolyzed water in a space between the electrode part and the barrier part due to the barrier part, so that the electrolyzed water may be effectively heated, and the heating rate may be improved.

In addition, the barrier part may be disposed on both sides of the electrode part, so that heating uniformity characteristics for heating the electrolyzed water through the electrode part may be improved.

In addition, the heat dissipation part includes the body part and the heat dissipation protrusions, and the body part includes one or more convex regions and one or more concave regions formed to face the fluid, so that the efficiency of heat transfer from the heat dissipation part to the fluid may be improved and smooth circulation of the fluid may be improved through the flow of the fluid.

In addition, the base of the heat dissipation part includes one or more convex regions and one or more concave regions formed to face the electrolyzed water, so that heat transfer from the electrolyzed water to the heat dissipation part may be smoothly performed.

In addition, the heat dissipation protrusion includes a plurality of heat dissipation protrusions protruding from the base, and the heat dissipation protrusions may have shapes elongated and spaced apart from each other as an optional embodiment. An area for heat transfer to the fluid through the heat dissipation part may be increased through the heat dissipation protrusions, so that a fluid heating rate may be improved, and heating uniformity may be improved.

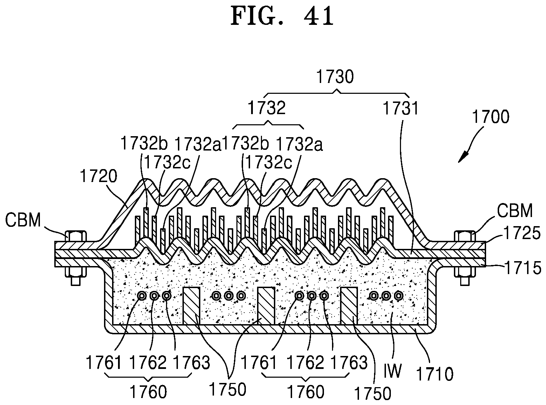

FIG. 41 is a schematic view illustrating an electrode boiler device according to another embodiment of the present disclosure.

Referring to FIG. 41, an electrode boiler device 1700 of the present embodiment may include a heating part 1710, a body part 1720, a heat dissipation part 1730, and an electrode part 1760.

For convenience of description, differences from the above-described embodiments will be mainly described.

The electrode part 1760 of the present embodiment may be provided in a three-phase form, and may include three electrode members. Specifically, the electrode part 1760 may include a first electrode 1761, a second electrode 1762, and a third electrode 1763.

The first, second, and third electrodes 1761, 1762, and 1763 may be electrically connected to an electrode control part so that current is applied thereto.

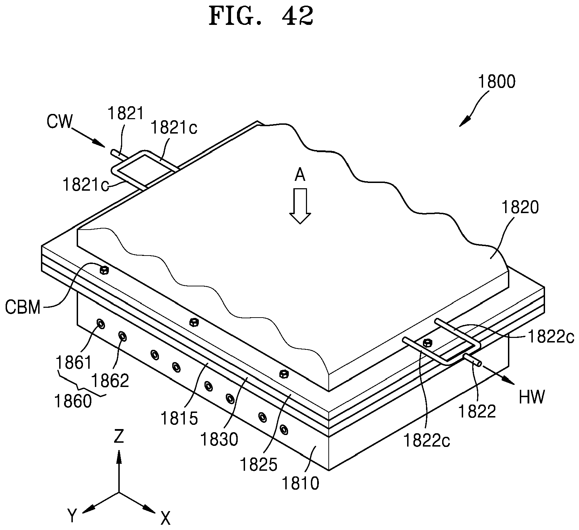

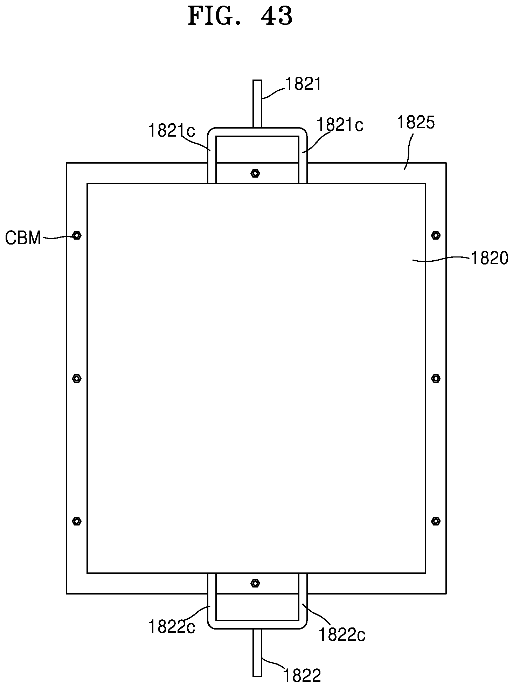

FIG. 42 is a schematic perspective view illustrating an electrode boiler device according to another embodiment of the present disclosure, and FIG. 43 is a schematic view as viewed from direction A of FIG. 42.

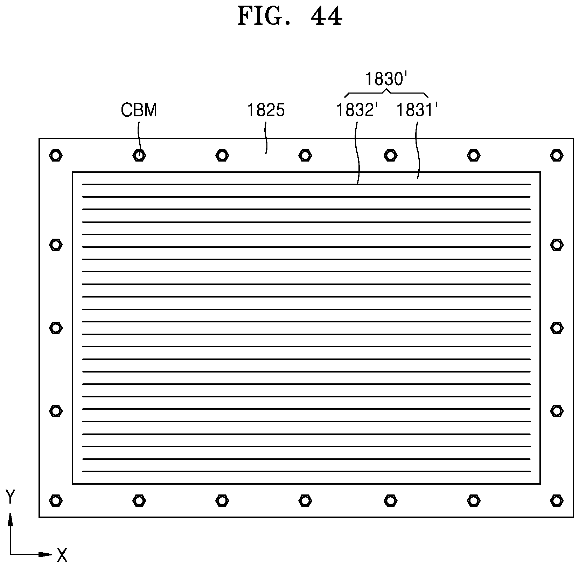

FIG. 44 is a view illustrating an optional embodiment of the heat dissipation part of FIG. 42.

An electrode boiler device 1800 of the present embodiment may include a heating part 1810, a body part 1820, a heat dissipation part 1830, and an electrode part 1860.

For convenience of description, differences from the above-described embodiments will be mainly described.

The heating part 1810 may be formed such that electrolyzed water (not shown) is disposed therein.
In addition, the heating part 1810 may be formed such that a width or length of a region in which the electrolyzed water (not shown) is disposed is greater than a height of the region.

A barrier part (not shown) may be formed inside the heating part 1810, and detailed contents thereof are the same as those described in the above-described embodiments, and thus will be omitted.

In an optional embodiment, a first connection part 1815 may be formed on one side of the heating part 1810. For example, the first connection part 1815 may have a shape extending outwardly from an upper end of a side surface of the heating part 1810.

The body part 1820 may be formed such that a fluid (not shown) may be disposed therein to overlap the electrolyzed water (not shown) in at least one region.
In addition, the body part 1820 may be formed such that a width or length of a region in which the fluid (not shown) is disposed is greater than a height of the region.

The body part 1820 may have various shapes, and may include at least an inlet 1821 for inflowing the fluid WT and an outlet 1822 for discharging the fluid WT.

In addition, in an optional embodiment, the inlet 1821 may be connected to the body part 1820 through a plurality of inlet connection members 1821c, and the outlet 1822 may be connected to the body part 1820 through a plurality of outlet connection members 1822c. This may improve a rate of inflow through the inlet 1821 and a rate of outflow through the outlet 1822.

In an optional embodiment, a second connection part 1825 may be formed on one side of the body part 1820. In addition, the second connection part 1825 may be formed to overlap the first connection part 1815.

The body part 1820 may have various shapes, for example, a curved shape, and specifically, may have a convex or concave region on an outer side thereof. In addition, the body part 1820 may include a convex region and a concave region that are convex and concave in a direction toward the fluid (not shown).

The electrode part 1860 may be disposed in the heating part 1810. In addition, the electrode part 1860 may be disposed to overlap the fluid (not shown) of the body part 1820 in the heating part 1810.

The heat dissipation part 1830 may have various shapes, and for example, the contents described in the above-described embodiments may be selectively applied.

In addition, in an optional embodiment, as shown in FIG. 44, a heat dissipation part 1830' may include a base 1831' and a heat dissipation protrusion 1832' formed on one surface of the base 1831', and the heat dissipation protrusion 1832' may have a shape elongated in one direction. For example, each heat dissipation protrusion 1832' may be formed on one surface of the base 1831' and may be formed in the body part 1820 to face one side surface of the body part 1820 and a side surface of the body part 1820 facing the one side surface.

The first connection part 1815 and the second connection part 1825 may have regions overlapping and coupled to one region of the heat dissipation part 1830 disposed therebetween. For example, the first connection part 1815, the second connection part 1825, and the one region of the heat dissipation part 1830 are coupled to each other to couple the heating part 1810, the body part 1820, and the heat dissipation part 1830.

In an optional embodiment, a coupling member CBM may be disposed to overlap one region of the heat dissipation part 1830, which is disposed between the first connection part 1815 and the second connection part 1825, to couple the one region of the heat dissipation part 1830 to the first connection part 1815 and the second connection part 1825.

Although not shown in the drawing, in an optional embodiment, the above-described structure of FIG. 27 or 28 may be selectively applied.

The electrode boiler device of the present embodiment may heat electrolyzed water inside the heating part through control of current applied to the electrodes of the electrode part of the heating part. The heat of the electrolyzed water may be transferred to a fluid of the body part to heat the fluid. Here, the heat dissipation part is disposed between the heating part and the body part so that the heat of the electrolyzed water is transferred to the fluid through the heat dissipation part.

Meanwhile, Joule heat may be effectively transferred to the electrolyzed water in a space between the electrode part and the barrier part due to the barrier part, so that the electrolyzed water may be effectively heated, and the heating rate may be improved.

In addition, the barrier part may be disposed on both sides of the electrode part, so that heating uniformity characteristics for heating the electrolyzed water through the electrode part may be improved.

In addition, the heat dissipation part includes the body part and the heat dissipation protrusions, and the body part includes one or more convex regions and one or more concave regions formed to face the fluid, so that the efficiency of heat transfer from the heat dissipation part to the fluid may be improved and smooth circulation of the fluid may be improved through the flow of the fluid.

In addition, the base of the heat dissipation part includes one or more convex regions and one or more concave regions formed to face the electrolyzed water, so that heat transfer from the electrolyzed water to the heat dissipation part may be smoothly performed.

In addition, the heat dissipation protrusion includes a plurality of heat dissipation protrusions protruding from the base, and the heat dissipation protrusions may have shapes elongated and spaced apart from each other as an optional embodiment. An area for heat transfer to the fluid through the heat dissipation part may be increased through the heat dissipation protrusions, so that a fluid heating rate may be improved, and heating uniformity may be improved.

In addition, the body part and the heating part described in the present embodiment or the embodiments described above may have a shape similar to a plate such that a width or length thereof is greater than a height. Accordingly, an electrode boiler system may be easily disposed in a narrow space, for example, a plate-shaped region such as a floor of a vehicle.

In addition, even when using the electrode boiler system for home use, the electrode boiler system may be effectively disposed in a narrow space in a room, living room, or other space.

Although the present disclosure has been described with reference to the embodiment shown in the drawings, which is merely exemplary, it will be understood by those skilled in the art that various modifications and equivalent other embodiments are possible therefrom. Accordingly, the true technical protection scope of the present disclosure should be determined by the technical spirit of the appended claims.

The particular implementations shown and described herein are illustrative examples of the embodiments and are not intended to otherwise limit the scope of the embodiments in any way. In addition, no item or element is essential to the practice of the present disclosure unless the element is specifically described as "essential" or "critical".

The use of the terms "a" and "an" and "the" and similar referents in the context of describing the present disclosure (especially in the context of the following claims) are to be construed to cover both the singular and the plural. Further, recitation of ranges of values herein are merely intended to serve as a shorthand method of referring individually to each separate value falling within the range, unless otherwise indicated herein, and each separate value is incorporated into the specification as if it were individually recited herein. Finally, operations of all methods described herein can be performed in any suitable order unless otherwise indicated herein or otherwise clearly contradicted by context. The present disclosure is not limited to the described order of the operations. The use of any and all examples, or exemplary terms (e.g., "such as") provided herein, is intended merely to better illuminate the present disclosure and does not pose a limitation on the scope of the present disclosure unless otherwise claimed. Also, numerous modifications and adaptations will be readily apparent to one of ordinary skill in the art without departing from the spirit and scope of the present disclosure.

## Claims

1. An electrode boiler device configured to heat a fluid, the electrode boiler device comprising:
a heating region formed such that electrolyzed water is disposed therein, the heating region having a length in one direction;
a body part disposed in at least one region of an outer side of the heating region in a direction crossing a longitudinal direction of the heating region and formed to allow the fluid to be disposed therein to overlap the electrolyzed water;
an electrode part having a plurality of electrodes formed to heat the electrolyzed water in the heating region; and
a heat dissipation part disposed between the heating region and the body part.

2. The electrode boiler device of claim 1, wherein the heat dissipation part further includes an insulating layer formed on one side thereof facing the electrolyzed water.

3. The electrode boiler device of claim 1, wherein the fluid is disposed to surround a side surface of the heating region.

4. The electrode boiler device of claim 1, wherein the heat dissipation part includes a base and a plurality of heat dissipation protrusions formed to protrude from the base to face the fluid.

5. An electrode boiler device configured to heat a fluid, the electrode boiler device comprising:
a heating part formed such that electrolyzed water is disposed therein and a width or a length of a region in which the electrolyzed water is disposed is greater than a height of the region;
a body part formed to allow the fluid to be disposed therein so as to overlap the electrolyzed water in at least one region;
an electrode part disposed in the heating part and including one or more electrodes that are disposed to overlap the fluid in the body part and formed to heat the electrolyzed water; and
a heat dissipation part disposed between the heating part and the body part.
